# EUROPEAN PATENT SPECIFICATION

(11) **EP 3 893 226 B1**
(45) Date of publication and mention of the grant of the patent: **11.09.2024**
(21) Application number: 19892226.2
(22) Date of filing: 27.11.2019
(51) Int. Cl.: G09B 9/00, G09B 23/30, G09B 23/28

(54) **VASCULAR MODEL AND ORGAN SIMULATOR**
GEFÄSSMODELL UND ORGANSIMULATOR
MODÈLE VASCULAIRE ET SIMULATEUR D'ORGANE

(30) Priority: 03.12.2018 JP 2018226406
(43) Date of publication of application: 13.10.2021
(73) Proprietor: ASAHI INTECC CO., LTD., Seto-shi, Aichi 489-0071 (JP)
(72) Inventor: YONEYAMA, Rina, Seto-shi, Aichi 489-0071 (JP); YAMANAKA, Nobuyoshi, Seto-shi, Aichi 489-0071 (JP); NAMIMA, Satoshi, Seto-shi, Aichi 489-0071 (JP); NAKADA, Masakazu, Seto-shi, Aichi 489-0071 (JP)
(74) Representative: Winter, Brandl - Partnerschaft mbB
(86) International application number: PCT/JP2019/046358
(87) International publication number: WO 2020/116277

(56) References cited:
- WO-A1-2016/075732
- WO-A2-2006/074159
- WO-A2-2015/008152
- CN-U- 206 601 878
- JP-A- 2008 151 895
- JP-A- 2012 068 505
- JP-A- 2014 228 803
- KR-B1- 101 913 204
- US-A1- 2017 103 682
- US-B1- 8 920 176
- ENCHI, YUKIHIRO; IMAI, KUNIHARU; TAKASE, IKUKO; KAWAURA, CHIYO; IKEDA, MITSURU: "Quantitative evaluation of vascular contour in head 3D-CT angiography using sequential approximation reconstruction", PROCEEDINGS OF THE 75TH (2013) NATIONAL CONVENTION OF IPSJ, INTERFACE COMPUTERS AND HUMAN SOCIETY, vol. 75, 26 March 2013 (2013-03-26), pages 555 - 556, XP009527510
- SAKAGUCHI, TAKUYA; IWAI, HARUKI; NAGAE, RYOICHI; NATSUME, TAKAHIRO; ICHIHARA, TAKASHI; YAGI, TOHRU: "New catheter-based calibration method for 2D X-ray angiography myocardial perfusion", IEEJ TRANSACTIONS ON ELECTRONICS, INFORMATION AND SYSTEMS SOCIETY PUBLICATION, vol. 136, no. 9, 2 September 2016 (2016-09-02), pages 1305 - 1311, XP009527518, ISSN: 0385-4221, DOI: 10.1541/ieejeiss.136.1305

## Description

### TECHNICAL FIELD

The present invention relates to a vascular model and an organ simulator.

### BACKGROUND ART

Medical devices such as catheters are used for low invasive treatments or examinations of living-body lumens such as the circulatory system and the digestive system. For example, Patent Literature 1, Patent Literature 2, Patent Literature 3, and Patent Literature 4 disclose simulators (a simulated human body or a simulated blood vessel) with which an operator such as a medical practitioner can simulate procedures using these medical devices. Further, Patent Literature 5 discloses a vascular model with which an operator such as a medical practitioner can simulate procedures using medical devices. Patent Literature 6 discloses an artificial blood vessel which can be used as a vascular graft for replacing a pathologically deteriorated blood vessel.

### CITATION LIST

### Patent Literature

Patent Literature 1: JP 2012 - 68 505 A
Patent Literature 2: JP 2014 - 228 803 A
Patent Literature 3: JP 2017 - 40 812 A
Patent Literature 4: Japanese Translation of PCT International App lication Publication No. 2004 - 508 589
Patent Literature 5: JP 2011 - 8 213 A
Patent Literature 6: JP 2006 - 334 278 A
Patent Literature 7: WO 2015 / 008 152 A2
Patent Literature 8: US 2017 / 103 682 A1

### SUMMARY OF THE INVENTION

### TECHNICAL PROBLEM

When treatment or examination is performed using a catheter and the like, angiography may be used in order to determine hemodynamics such as blood flow velocity and blood viscosity or an occluded state of a blood vessel. In angiography, a contrast agent with low radiolucency is injected through a catheter inserted into a blood vessel to perform radiography. An operator can determine hemodynamics and vascular conditions by investigating changed contrast in the resulting X-ray images (still pictures or video images, which may also be referred to as "cineradiographic images") to elucidate how the contrast agent flows.

For this reason, the flow of a contrast agent in a simulator (a simulated human body or a simulated blood vessel) needs to be as similar as possible to the actual flow in the living body. With regard to this, in a simulated human body described in Patent Literature 1 where a simulated left coronary artery and a simulated right coronary artery are connected to a reservoir space inside a heart model, a contrast agent is diluted in the reservoir space. However, the technology described in Patent Literature 1, in which a contrast agent is diluted in the reservoir space inside the heart model, has a problem in that the course of dense-staining of the myocardium which can be observed in X-ray images of the actual human body can not be reproduced. Further, the technology described in Patent Literature 1 has a problem in that dilution of a highly concentrated contrast agent is time-consuming. Moreover, in a simulator described in Patent Literature 2, a contrast agent is directed to a flow path formed to have a shape which simulates a vein. However, the technology described in Patent Literature 2 has a problem in that a highly concentrated contrast agent may flow into a flow path without being diluted, resulting in images which do not reflect actual conditions depending on observation angles. Further, technologies described in Patent Literature 3, Patent Literature 4, Patent Literature 5, and Patent Literature 6 do not even consider use of a contrast agent. Patent Literature 7 discloses a composition comprising a biocompatible, bioresorbable synthetic layer, wherein said synthetic layer comprises an element for adhesion to a blood vessel tissue cell, wherein said synthetic layer provides a scaffold for guiding tissue formation, and wherein said synthetic layer adheres to an inner surface of a blood vessel. Patent Literature 8 relates to a catheter simulator and an imaging method for a catheter simulator.

The present invention is made in order to solve at least partially the aforementioned problems. An object of the present invention is to provide a vascular model and an organ simulator in which X-ray images to be obtained during use of a contrast agent can be similar to those to be observed in the actual living body.

### MEANS FOR SOLVING THE PROBLEM

This object is solved by the subject matter of the independent claims 1 and 10. Further aspects are disclosed in the subclaims. The present invention is made in order to solve at least partially the above problems, and can be implemented according to the following aspects.

(1) According to one aspect of the present invention, provided is a vascular model. This vascular model includes a flow path forming portion for forming a fluid flow path extending in an extension direction of the vascular model; and a diffusion portion formed with a porous body and disposed so as to face the fluid flow path, the diffusion portion being for excreting a fluid flowing through the fluid flow path from pores of the porous body to the outside in a diffused manner.
   According to this configuration, the vascular model includes the diffusion portion formed with the porous body and disposed so as to face the fluid flow path extending in the extension direction of the vascular model, the diffusion portion being for excreting the fluid flowing through the fluid flow path from the pores of the porous body to the outside in a diffused manner. In other words, the diffusion portion formed with the porous body can function as a diffusive flow path (a buffering flow path) for dispersing the pressure and flow rate of a contrast agent flowing into the fluid flow path. In the vascular model of this configuration, the course of dense-staining which can be observed in X-ray images of the actual human body (specifically, a way in which a contrast agent spreads along arterioles, and then diffuses over arterioles to disappear) can therefore be simulated in X-ray images to be obtained during use of a contrast agent. This can provide a vascular model in which X-ray images to be obtained during use of a contrast agent can simulate the actual living body.
(2) In the vascular model according to the above aspect, the pores of the porous body in the diffusion portion are filled with an elastic body. According to this configuration where the pores of the porous body in the diffusion portion are filled with the elastic body, each of the pores of the porous body can be blocked while the pressure inside the fluid flow path is low, and each of the pores of the porous body can be opened when the pressure inside the fluid flow path is increased due to inflow of a contrast agent. This enables a contrast agent to be diffused and excreted more finely, and also enables the course of dense-staining in X-ray images to be obtained during use of the contrast agent (diffusing and disappearing images) to simulate the actual human body more closely. Further, this can prevent backflow of a fluid present outside the vascular model into the fluid flow path through each of the pores of the porous body when the vascular model is used under a wet condition where the vascular model is immersed into a fluid (water, physiological saline, and the like).
(3) In the vascular model according to any one of the above aspects, the flow path forming portion may be a tubular body extending in the extension direction of the vascular model, and the diffusion portion may be disposed at a distal end portion of the tubular body. According to this configuration where the diffusion portion is disposed at the distal end portion of the flow path forming portion (the tubular body), the course of dense-staining in X-ray images to be obtained during use of a contrast agent can be simulated by the distal end of the fluid flow path.
(4) In the vascular model according to any one of the above aspects, the flow path forming portion may be a tubular body extending in the extension direction of the vascular model, and the diffusion portion may be disposed at a branched portion where the tubular body is branched. According to this configuration where the diffusion portion is disposed at the branched portion where the flow path forming portion (the tubular body) is branched, the course of dense staining in X-ray images to be obtained during use of a contrast agent can be simulated by the branched portion of the fluid flow path.
(5) In the vascular model according to any one of the above aspects, the flow path forming portion may be a groove body extending in the extension direction of the vascular model and having an opening formed in at least a portion of a circumferential direction, and the diffusion portion may be disposed so as to face the opening of the groove body. According to this configuration where the diffusion portion is disposed so as to face the opening of the flow path forming portion (the groove body), the course of dense-staining in X-ray images to be obtained during use of a contrast agent can be simulated by the entire region of the fluid flow path.
(6) In the vascular model according to any one of the above aspects, the flow path forming portion may be formed with a porous body, and may function as a diffusion portion for excreting a fluid flowing through the fluid flow path from pores of the porous body to the outside in a diffused manner. According to this configuration where the flow path forming portion is formed with the porous body, the flow path forming portion can function as a diffusion portion for excreting a fluid flowing through the fluid flow path from the pores of the porous body to the outside in a diffused manner.
(7) In the vascular model according to any one of the above aspects, at least a portion of the fluid flow path in the flow path forming portion may be coated. According to this configuration, at least a portion of the fluid flow path extending in the extension direction of the vascular model is coated in the flow path forming portion. This enables the sliding resistance in the fluid flow path to simulate the actual living body (a blood vessel) more closely, and enables a medical device to smoothly move forward through the fluid flow path.
(8) According to one aspect of the present invention, provided is an organ simulator. This organ simulator includes an organ model simulating an organ, and the vascular model according to any one of the above aspects arranged on a surface of the organ model. According to this configuration, an organ simulator can be obtained in which the vascular model according to any one of the above aspects as described above is included as a blood vessel arranged around on the surface of the organ model. Further, the vascular model according to any one of the above aspects as described above is to be arranged on the surface of the organ model. This can improve the degree of freedom for designing the organ model. For example, the inner cavity of the organ model may be used for a different purpose other than the purpose for diffusing a contrast agent, or the organ model may be configured to be solid.
(9) In the organ simulator according to any one of the above aspects, the organ model may include a surface layer formed with a porous body, and the diffusion portion of the vascular model is arranged so as to be adjacent to the surface layer of the organ model. According to this configuration where the diffusion portion of the vascular model is arranged so as to be adjacent to the surface layer of the organ model, a contrast agent excreted to the outside through the diffusion portion can be directed to the surface layer of the organ model. Further, the surface layer of the organ model, which is formed with the porous body, can function as a diffusive flow path (a buffering flow path) for further dispersing the pressure and flow rate of a contrast agent flowing into the surface layer. According to the organ simulator of this configuration in which a contrast agent is diffused and excreted by both the diffusion portion of the vascular model and the surface layer of the organ model as described above, the contrast agent can be diffused and excreted more finely. This enables the course of dense-staining in X-ray images to be obtained during use of the contrast agent to simulate the actual living body more closely.
(10) In the organ simulator according to any one of the above aspects, a fixing member fixing the vascular model to the surface of the organ model may be included. According to this configuration where the vascular model can be fixed to the surface of the organ model with the fixing member, the organ model and the vascular model can be maintained in a desired relative portion.
(11) In the organ simulator according to any one of the above aspects, the organ model may be a heart model having an inner cavity and simulating a heart, and may further include a pulsating unit for causing the heart model to pulsate by discharging and withdrawing an expansion medium to and from the inner cavity of the heart model. According to this configuration, the organ model can be configured as a heart model, and the vascular model can be configured as a coronary artery model arranged around on the surface of the heart model. Further, according to this configuration, the heart model can pulsate as in the actual human body by virtue of the pulsating unit for discharging and withdrawing an expansion medium to and from the inner cavity of the heart model. This enables the course of dense-staining in X-ray images to be obtained during use of the contrast agent (diffusing and disappearing images) to simulate the actual living body more closely, and can also improve user's feeling of operations of the organ simulator.
(12) In the organ simulator according to any one of the above aspects, a pericardium portion with a film-like shape covering the surface of the heart model may be further included, and the vascular model may be housed in a space between an inner surface of the pericardium portion and the surface of the heart model. This configuration enables the pericardium portion with a film-like shape covering the surface of the heart model to simulate the lateral pericardium and fibrous pericardium in the actual living body, and also enables the space between the inner surface of the pericardium portion and the surface of the heart model to simulate the pericardial cavity in the actual living body.

It is noted that the present invention can be implemented according to various aspects. For example, it can be implemented according to the following aspects: a vascular model simulating a cardiac blood vessel, a liver blood vessel, a cerebral blood vessel, or the like; an organ model simulating an organ such as heart, liver, and brain; an organ simulator including the vascular model and the organ model; a human body simulating apparatus including at least a part thereof, and a method of controlling the human body simulating apparatus; and the like.

### BRIEF DESCRIPTION OF THE DRAWINGS

Fig. 1 shows a schematic configuration of a human body simulating apparatus.
Fig. 2 shows a schematic configuration of the human body simulating apparatus.
Fig. 3 shows a schematic configuration of an aortic model.
Fig. 4 shows a schematic configuration of a model.
Fig. 5 shows a schematic configuration of a model.
Fig. 6 shows a diagram of a schematic configuration of an organ simulator.
Fig. 7 shows a diagram of a schematic configuration of the organ simulator.
Fig. 8 shows a cross-sectional view along the A1-A1 line in Fig. 7.
Fig. 9 shows a cross-sectional view along the A2-A2 line in Fig. 7.
Fig. 10 are diagrams illustrating how a contrast agent CAis diffused.
Fig. 11 is a diagram illustrating how the contrast agent CAis diffused.
Fig. 12 shows a diagram of a schematic configuration of a diffusion portion according to a second embodiment.
Fig. 13 shows a diagram of a schematic configuration of an organ simulator according to a third embodiment.
Fig. 14 shows a cross-sectional view along the B-B line in Fig. 13.
Fig. 15 shows a diagram of a schematic configuration of an organ simulator according to a fourth embodiment.
Fig. 16 shows a cross-sectional view along the C-C line in Fig. 15.
Fig. 17 shows a diagram of a schematic configuration of an organ simulator according to a fifth embodiment.
Fig. 18 shows a cross-sectional view along the D-D line in Fig. 17.
Fig. 19 shows a diagram of a schematic configuration of an organ simulator according to a sixth embodiment.
Fig. 20 shows a cross-sectional view along the E-E line in Fig. 19.
Fig. 21 shows a diagram of a schematic configuration of an organ simulator according to a seventh embodiment.
Fig. 22 shows a diagram of a schematic configuration of an organ simulator according to an eighth embodiment.
Fig. 23 shows a diagram of a schematic configuration of an organ simulator according to a ninth embodiment (Not covered by the present claims).
Fig. 24 shows a cross-sectional view along the A1-A1 line (Fig. 7) of an organ simulator according to a tenth embodiment.
Fig. 25 shows a diagram of a schematic configuration of an organ simulator according to an eleventh embodiment.
Fig. 26 shows a diagram of a schematic configuration of an organ simulator according to a twelfth embodiment.

### EMBODIMENTS OF THE INVENTION

### First embodiment

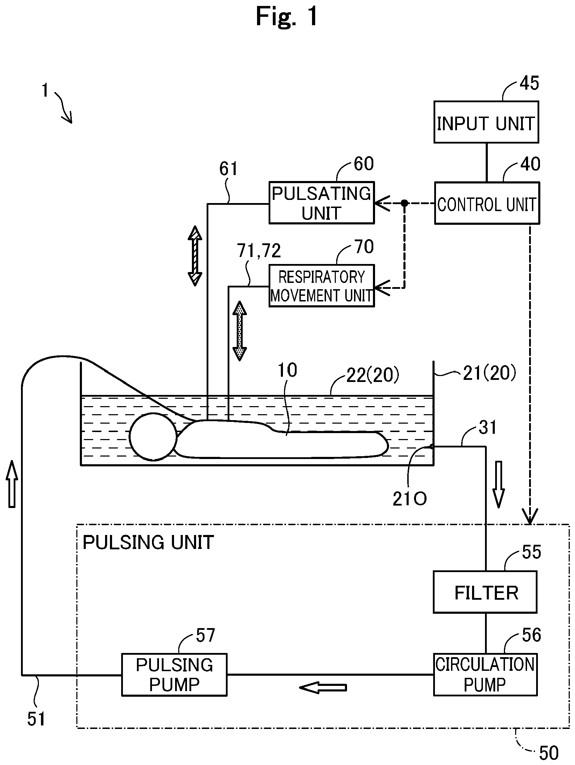

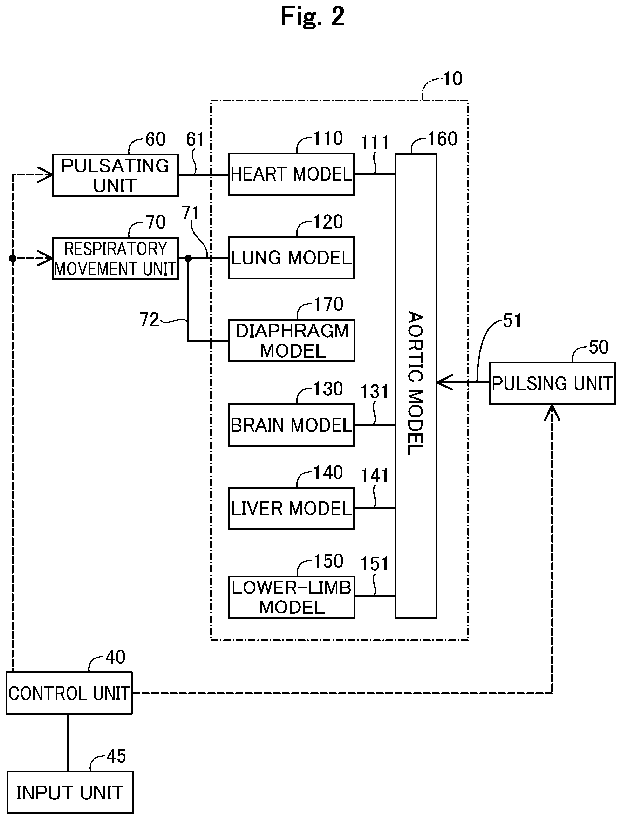

Figs. 1 and 2 show schematic configurations of a human body simulating apparatus 1. The human body simulating apparatus 1 according to the present embodiment may be used to simulate procedures for treating or examining living-body lumens such as the circulatory system, the digestive system, and the respiratory system of the human body using medical devices. The term "medical device" as used herein means a device, such as a catheter and a guide wire, for low invasive treatment or examination. The human body simulating apparatus 1 includes a model 10, a housing 20, a control unit 40, an input unit 45, a pulsing unit 50, a pulsating unit 60, and a respiratory movement unit 70.

As shown in Fig. 2, the model 10 includes a heart model 110 simulating the human heart, a lung model 120 simulating the lung, a diaphragm model 170 simulating the diaphragm, a brain model 130 simulating the brain, a liver model 140 simulating the liver, a lower-limb model 150 simulating the lower limbs, and an aortic model 160 simulating the aorta. Hereinafter, the heart model 110, the lung model 120, the diaphragm model 170, the brain model 130, the liver model 140, and the lower-limb model 150 may also be collectively called a "biological model." The heart model 110, the brain model 130, the liver model 140, and the lower-limb model 150 may also be collectively called an "organ model." The lung model 120 and the diaphragm model 170 may also be collectively called a "respiratory-organ model." The biological models except for the lung model 120 and the diaphragm model 170 (that is, the organ models) are each connected to the aortic model 160. The model 10 will be described in detail below.

The housing 20 includes a tank 21 and a cover 22. The tank 21 is a substantially rectangular parallelepiped tank having an opening at the top. As shown in Fig. 1, the model 10 is placed on the bottom of the tank 21 which has been filled with a fluid to immerse the model 10 under the fluid. According to the present embodiment, water (liquid) is used as the fluid to maintain the model 10 in a wet condition as in the actual human body. It is noted that other liquids (for example, physiological saline, aqueous solutions of any compounds, and the like) may be used as the fluid. The fluid filled in the tank 21 will be uptaken into the inside of the aortic model 160 and others of the model 10 to function as a "blood simulate" which simulates blood.

The cover 22 is a plate-shaped member for covering the opening of the tank 21. The cover 22 can function as a wave-cancelling plate by placing the cover 22 so that one surface of the cover 22 is brought into contact with the fluid while the other is exposed to the air. This can prevent decreased visibility due to waving of the fluid inside the tank 21. The tank 21 and the cover 22 according to the present embodiment, which are formed with a radiolucent and highly transparent synthetic resin (for example, acrylic resin), can improve the visibility of the model 10 from the outside. It is noted that the tank 21 and the cover 22 may be formed with another synthetic resin, or may be formed with different materials.

The control unit 40 includes CPU, ROM, RAM, and a storage unit, and can control operations of the pulsing unit 50, the pulsating unit 60, and the respiratory movement unit 70 by deploying and running a computer program stored in the ROM in the RAM. The input unit 45 may be an interface of any kind used for a user to input information into the human body simulating apparatus 1. The input unit 45 may be, for example, a touch screen, a keyboard, an operation button, an operation dial, a microphone, or the like. Hereinafter, a touch screen is used as an illustrative example of the input unit 45.

The pulsing unit 50 is a "fluid supplying unit" which can discharge a pulsed fluid to the aortic model 160. Specifically, the pulsing unit 50 can circulate and pass a fluid in the tank 21 through the aortic model 160 of the model 10 as indicated by the open arrow in Fig. 1. The pulsing unit 50 according to the present embodiment include a filter 55, a circulation pump 56, and a pulsing pump 57. The filter 55 is connected to an opening 210 of the tank 21 through a tubular body 31. The filter 55 can filter a fluid passing through the filter 55 to remove impurities (for example, a contrast agent used during procedures) in the fluid. The circulation pump 56 may be, for example, a non-positive displacement centrifugal pump, and can circulate a fluid coming from the tank 21 through the tubular body 31 at a constant flow rate.

The pulsing pump 57 may be, for example, a positive-displacement reciprocating pump, and can add a pulse to the fluid discharged from the circulation pump 56. The pulsing pump 57 is connected to the aortic model 160 of the model 10 through a tubular body 51 (Fig. 2). Therefore, a fluid discharged from the pulsing pump 57 is passed to the inner cavity of the aortic model 160. It is noted that a rotary pump operated at a low speed may be used as the pulsing pump 57 instead of a reciprocating pump. Further, the filter 55 and the circulation pump 56 may be omitted. The tubular body 31 and the tubular body 51 are flexible tubes formed with a synthetic resin (for example, silicone and the like) of a radiolucent soft material.

The pulsating unit 60 can cause the heart model 110 to pulsate. Specifically, the pulsating unit 60 can expand the heart model 110 by discharging a fluid into the inner cavity of the heart model 110, and can contract the heart model 110 by withdrawing the fluid from the inner cavity of the heart model 110 as indicated by the hatched arrow in Fig. 1. The pulsating unit 60 can repeat these discharging and withdrawing operations to create pulsating movements (expansion and contraction movements) of heart model 110. A fluid which can be used with the pulsating unit 60 (hereinafter referred to as an "expansion medium") may be a liquid like a blood simulate, or may be, for example, a gas such as air. An expansion medium is preferably an organic solvent such as benzene and ethanol or a radiolucent liquid such as water. The pulsating unit 60 may be implemented by using, for example, a positive-displacement reciprocating pump. The pulsating unit 60 is connected to the aortic model 110 of the model 10 through a tubular body 61 (Fig. 2). The tubular body 61 is a flexible tube formed with a synthetic resin (for example, silicone and the like) of a radiolucent soft material.

The respiratory movement unit 70 enables the lung model 120 and the diaphragm model 170 to simulate respiratory movements. Specifically, the respiratory movement unit 70 can discharge a fluid to an inner cavity of the lung model 120 and the diaphragm model 170 as indicated by the dot-hatched arrow in Fig. 1 to expand the lung model 120 and contract the diaphragm model 170. Further, the respiratory movement unit 70 can withdraw a fluid from the inner cavity of the lung model 120 and the diaphragm model 170 to contract the lung model 120 and relax the diaphragm model 170. The respiratory movement unit 70 can repeat these discharging and withdrawing operations to generate respiratory movements of the lung model 120 and the diaphragm model 170. A fluid which can be used with the respiratory movement unit 70 may be a liquid like a blood simulate, or may be, for example, a gas such as air. The respiratory movement unit 70 can be implemented by using, for example, a positive-displacement reciprocating pump. The respiratory movement unit 70 is connected to the lung model 120 of the model 10 through a tubular body 71, and connected to the diaphragm model 170 through a tubular body 72 (Fig. 2). The tubular bodies 71, 72 are flexible tubes formed with a synthetic resin (for example, silicone and the like) of a radiolucent soft material.

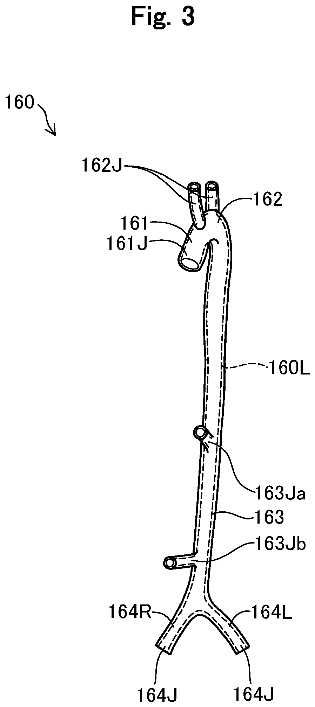

Fig. 3 shows a schematic configuration of the aortic model 160. The aortic model 160 is composed of components which simulate those of the human aorta, i.e., an ascending aorta portion 161 which simulates the ascending aorta, an aortic arch portion 162 which simulates the aortic arch, an abdominal aorta portion 163 which simulates the abdominal aorta, and a common iliac aorta portion 164 which simulates the common iliac aorta.

The aortic model 160 includes a second connection portion 161J for connection with the heart model 110 at an end portion of the ascending aorta portion 161. Similarly, it includes a first connection portion 162J for connection with the brain model 130 in the vicinity of the aortic arch portion 162, a third connection portion 163Ja for connection with the liver model 140 in the vicinity of the abdominal aorta portion 163, and a pair of fourth connection portions 164J for connection with the right and left lower-limb models 150, respectively, at an end portion of the common iliac aorta portion 164. It is noted that the second connection portion 161J may be arranged at the ascending aorta portion 161 or in the vicinity thereof, and the fourth connection portions 164J may be arranged at the common iliac aorta part 164 or in the vicinity thereof. Hereinafter, the first to fourth connection portions 161J to 164J may also be collectively called a "biological-model connection portion." Further, the aortic model 160 includes a fluid supplying unit connection portion 163Jb for connection with the pulsing unit 50 in the vicinity of the abdominal aorta portion 163. It is noted that the fluid supplying unit connection portion 163Jb may be arranged at any location including in the vicinity of the ascending aorta portion 161, in the vicinity of the cerebral vascular model 131 (for example, the common carotid artery), and the like, but not limited to the abdominal aorta portion 163. Further, the aortic model 160 may include a plurality of fluid supplying unit connection portions 163Jb arranged at different locations.

Further, an inner cavity 160L is formed inside the aortic model 160. The inner cavity 160L has an opening for each of the aforementioned biological-model connection portions and fluid supplying unit connection portion (the first connection portion 162J, the second connection portion 161J, the third connection portion 163Ja, the pair of fourth connection portions 164J, and the fluid supplying unit connection portion 163Jb). The inner cavity 160L can function as a flow path for transporting a blood simulate (a fluid) passed from the pulsing unit 50 to the heart model 110, the brain model 130, the liver model 140, and the lower-limb models 150.

The aortic model 160 according to the present embodiment may be formed with a synthetic resin (for example, polyvinyl alcohol (PVA), silicone, and the like) of a radiolucent soft material. In particular, use of PVA is preferred in that the hydrophilicity of PVA enables a user to feel the aortic model 160 immersed under a liquid as if it were the actual human aorta in the body.

The aortic model 160 may be produced, for example, as follows. First, a mold is prepared which simulates the shape of the human aorta. The mold may be produced by, for example, 3D-printing using data of the aorta in the human model data generated by analyzing images from CT (Computed Tomography) or MRI (Magnetic Resonance Imaging) of a human body. The model may be of gypsum, metal, or resin. Next, a liquefied synthetic resin material may be applied on the inner surface the model prepared. After cooled and cured, the synthetic resin material is demolded. In this way, the aortic model 160 having the inner cavity 160L can easily be produced.

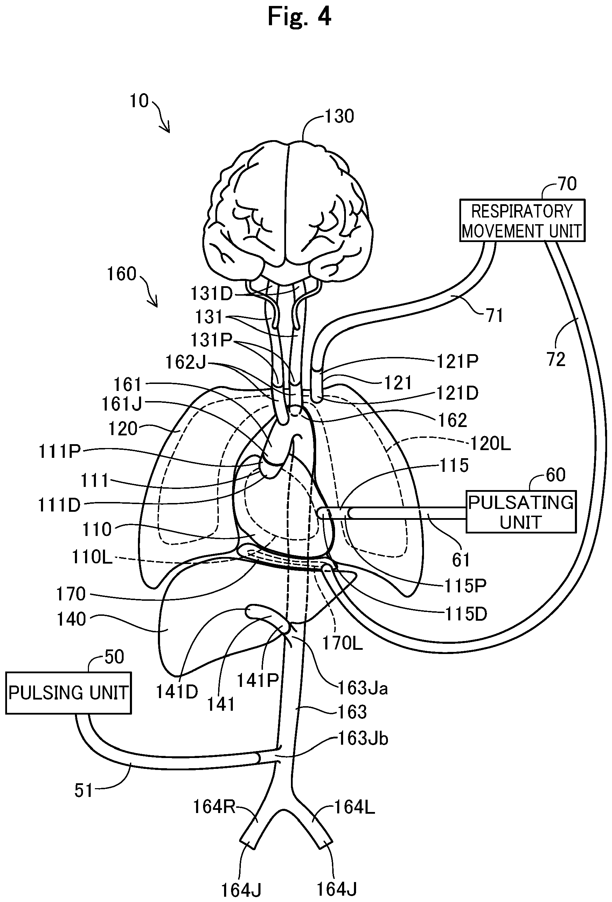

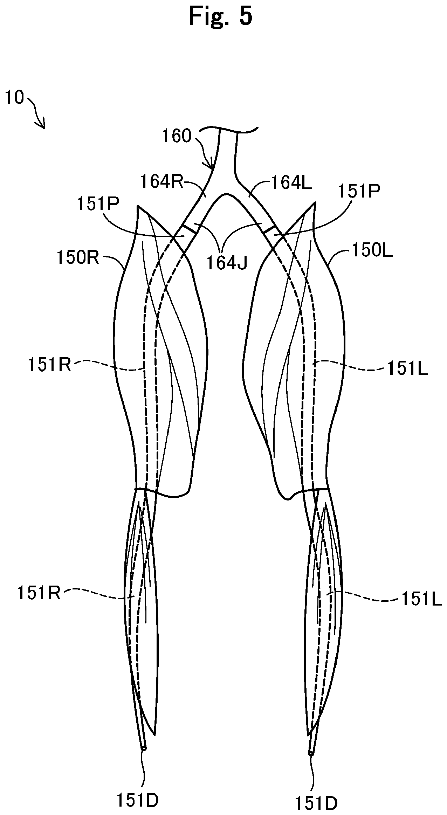

Figs. 4 and 5 shows a schematic configuration of the model 10. As shown in Fig. 4, the heart model 110 has a shape simulating the heart, and has an inner cavity 110L formed thereinside. The heart model 110 according to the present embodiment may be formed with a synthetic resin (for example, silicone and the like) of a radiolucent soft material, and may be produced by applying a synthetic resin material on the inner surface of a mold prepared based on human body data, and then demolding it as in the aortic model 160. Further, the heart model 110 includes a tubular body 115, and is connected to a cardiovascular model 111. The cardiovascular model 111 is a tubular vascular model which simulates a part of the ascending aorta and the coronary artery, and may be formed with a synthetic resin (for example, PVA, silicone, and the like) of a radiolucent soft material. The tubular body 115 is a flexible tube formed with a synthetic resin (for example, silicone and the like) of a radiolucent soft material. The tubular body 115 is connected so that a distal end 115D is in communication with the inner cavity 110L of the heart model 110, and a proximal end 115P is in communication with the tubular body 61 leading to the pulsating unit 60.

The lung models 120 each have a shape which simulate either the right or left lung, and have one inner cavity 120L formed thereinside which is in communication with the right lung and the left lung. The lung models 120 are arranged so as to cover the right and left sides of the heart model 110. The lung models 120 may be produced using a similar material and method as in the heart model 110. The lung models 120 may be made of the same material as the heart model 110, or may be made of different materials. Further, the lung model 120 is connected to a tracheal model 121 which is tubular, and simulates a part of the trachea. The tracheal model 121 may be produced using a similar material as the tubular body 115 of the heart model 110. The tracheal model 121 may be made of the same material as the tubular body 115, or may be made of a different material. The tracheal model 121 is connected so that a distal end 121D is in communication with the inner cavity 120L of the lung model 120, and a proximal end 121P is in communication with the tubular body 71 leading to the respiratory movement unit 70.

The diaphragm model 170 has a shape which simulates the diaphragm, and has an inner cavity 170L formed thereinside. The diaphragm model 170 is arranged below the heart model 110 (in other words, arranged at the opposite side of the brain model 130 across the heart model 110). The diaphragm model 170 may be produced using a similar material and method as in the heart model 110. The diaphragm model 170 may be made of the same material as the heart model 110, or may be made of a different material. Further, the tubular body 72 leading to the respiratory movement unit 70 is connected to the diaphragm model 170 so that the inner cavity 170L of the diaphragm model 170 is in communication with an inner cavity of the tubular body 72.

The brain model 130 has a shape which simulates the brain, and is configured to be solid without having an inner cavity. The brain model 130 is arranged above the heart model 110 (in other words, arranged at the opposite side of the diaphragm model 170 across the heart model 110). The brain model 130 may be produced using a similar material and method as in the heart model 110. The brain model 130 may be made of the same material as the heart model 110, or may be made of a different material. Further, the brain model 130 is connected to the cerebral vascular model 131 which is a tubular vascular model simulating at least a part of the main arteries including a pair of the right and left vertebral arteries from a pair of the right and left common carotid arteries. The cerebral vascular model 131 may be produced using a similar material as the cardiovascular model 111 of the heart model 110. The cerebral vascular model 131 may be made of the same material as the cardiovascular model 111, or may be made of a different material. Further, although not shown, the cerebral vascular model 131 may simulate not only an artery but also a major vein including the superior cerebral vein and the straight sinus.

It is noted that the brain model 130 may be a complex further including a bone model which simulates the human cranium and cervical vertebrae. For example, a cranium model may have a hard resin case simulating the parietal bone, temporal bone, occipital bone, and sphenoid bone; and a lid simulating the frontal bone. A cervical vertebrae model may have a plurality of rectangular resin bodies each having a through-hole thereinside through which a vascular model can pass. When included, the bone model may be produced with a resin having a hardness different from an organ model such as a vascular model and a brain model. For example, the cranium model may be produced with acrylic resin while a cervical vertebrae model may be produced with PVA.

The cerebral vascular model 131 is configured such that a distal end 131D is connected to the brain model 130, and a proximal end 131P is connected to the first connection portion 162J of the aortic model 160 (which corresponds to, for example, the brachiocephalic artery, the subclavian artery, or the vicinity thereof in the human body). The distal end 131D of the cerebral vascular model 131 may simulate a vertebral artery passing through the vertebrae and a different blood vessel arranged on the surface and/or in the inside of the brain model 130 (for example, the posterior cerebral artery, the middle cerebral artery), or may further simulate the posterior communicating artery, and be connected to a peripheral portion of the common carotid artery. Further, the proximal end 131P of the cerebral vascular model 131 is connected to the first connection portion 162J so that an inner cavity of the cerebral vascular model 131 is in communication with the inner cavity 160L of the aortic model 160.

The liver model 140 has a shape which simulates the liver, and is configured to be solid without having an inner cavity. The liver model 140 is arranged below the diaphragm model 170. The liver model 140 may be produced using a similar material and method as in the heart model 110. The liver model 140 may be made of the same material as the heart model 110, or may be made of a different material. Further, the liver model 140 is connected to a hepatic vascular model 141 which is a tubular vascular model simulating a part of the hepatic blood vessel. The hepatic vascular model 141 may be produced using a similar material as the cardiovascular model 111 of the heart model 110. The hepatic vascular model 141 may be made of the same material as the cardiovascular model 111, or may be made of a different material.

The hepatic vascular model 141 is configured so that a distal end 141D is connected to the liver model 140, and a proximal end 141P is connected to the third connection portion 163Ja of the aortic model 160. The distal end 141D of the hepatic vascular model 141 may simulate a different blood vessel arranged on the surface and/or the inside of the liver model 140 (for example, the hepatic artery). Further, the proximal end 141P of the hepatic vascular model 141 is connected to the third connection portion 163Ja so that an inner cavity of the hepatic vascular model 141 is in communication with the inner cavity 160L of the aortic model 160.

As shown in Fig. 5, the lower-limb model 150 includes a lower-limb model 150R for the right leg and a lower-limb model 150L for the left leg. The lower-limb models 150R and 150L, which have the same configuration except for constructive symmetry, hereinafter shall be described interchangeably as "the lower-limb model 150." The lower-limb model 150 has a shape which simulates at least a part of the major tissues such as quadriceps and crural tibialis anterior muscle in the thigh, peroneus longus, and extensor digitorum longus muscle, and is configured to be solid without having an inner cavity. The lower-limb model 150 may be produced using a similar material and method as in the heart model 110. The lower-limb model 150 may be made of the same material as the heart model 110, or may be made of a different material. Further, the lower-limb model 150 is connected to a lower-limb vascular model 151 (the lower limb vascular models 151R, 151L) which is a tubular vascular model simulating at least a part of the main artery from a femoral artery to the dorsalis pedis artery. The lower-limb vascular model 151 may be produced using a similar material as the cardiovascular model 111 of the heart model 110. The lower-limb vascular model 151 may be made of the same material as the cardiovascular model 111, or may be made of a different material. Further, the lower-limb vascular model 151 may simulate not only arteries but also the main vein from the common iliac vein to the great saphenous vein although not shown.

The lower-limb vascular model 151 is arranged so as to extend through the inside of the lower-limb model 150 in the extending direction from the thigh toward the side of the crus. The lower-limb vascular model 151 is configured such that a distal end 151D is exposed at a lower end (which corresponds to a portion from the tarsal portion to the acrotarsium portion) of the lower-limb model 150, and a proximal end 151P is connected to the fourth connection portion 164J of the aortic model 160. Here, the proximal end 151P is connected to the fourth connection portion 164J so that an inner cavity of the lower-limb vascular model 151 is in communication with the inner cavity 160L of the aortic model 160.

It is noted that the cardiovascular model 111, the cerebral vascular model 131, the hepatic vascular model 141, and the lower-limb vascular model 151 as described above may also be collectively called a "vascular model." Further, these vascular models and the aortic model 160 may also be collectively called a "systemic vascular model." These configurations enable a vascular model arranged on the surface of each biological model to simulate, for example, the posterior cerebral artery on the brain, the left and right coronary arteries on the heart, and the like. Further, these enable a vascular model arranged in the inside of each biological model to simulate, for example, the middle cerebral artery in the brain, the hepatic artery in the liver, the femoral artery in the lower limb, and the like.

In the human body simulating apparatus 1 according to the present embodiment, at least one or more biological models (the heart model 110, the lung model 120, the diaphragm model 170, the brain model 130, the liver model 140, the lower-limb model 150) can be detachably attached to the aortic model 160 to configure the model 10 according to various aspects. A combination of the biological models (the heart model 110, the lung model 120, the diaphragm model 170, the brain model 130, the liver model 140, the lower-limb model 150) to be attached to the aortic model 160 can be appropriately selected or changed depending on an organ required for a procedure. For example, the model 10 having the heart model 110 and the lower-limb model 150 attached can be used for simulating a procedure of the TFI (Trans-Femoral Intervention) approach of PCI with the human body simulating apparatus 1. In addition to these, all of the biological models except for the lower-limb model 150, for example, may be attached, or the heart model 110 and the lung model 120 may be attached, or the lung model 120 and the diaphragm model 170 may be attached, or the liver model 140 alone may be attached, or the lower-limb model 150 alone may be attached.

As described above, in the human body simulating apparatus 1 according to the present embodiment, a biological model (the heart model 110, the brain model 130, the liver model 140, the lower-limb model 150) which simulates a part of the inside of the human body may be connected to a biological model connection portion (the first connection portions 162J, the second connection portion 161J, the third connection portion 163Ja, the fourth connection portion 164J) to simulate various procedures using a medical device such as a catheter and a guide wire for a living-body lumen of an organ such as the circulatory system and the digestive system depending on the connected biological model(s). Further, biological models can be detachably attached to the biological model connection portions 16 1J to 164J, and thus a biological model which is not used for a procedure may also be removed and stored separately. This can improve convenience.

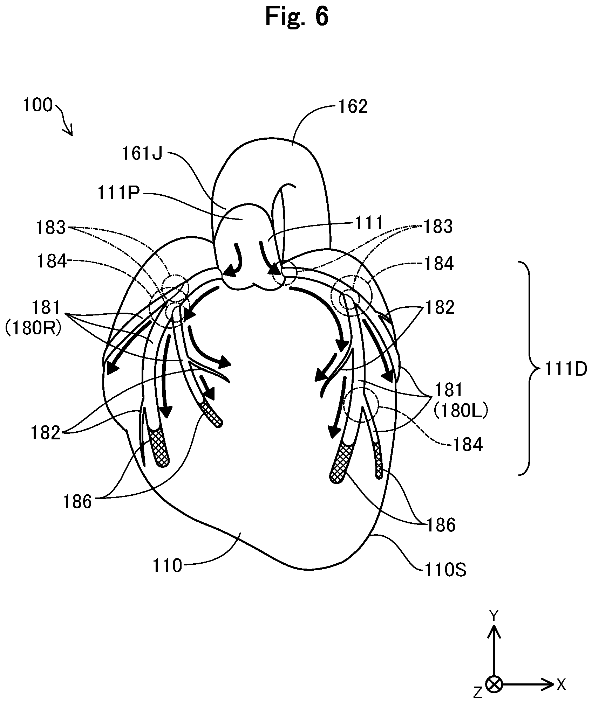

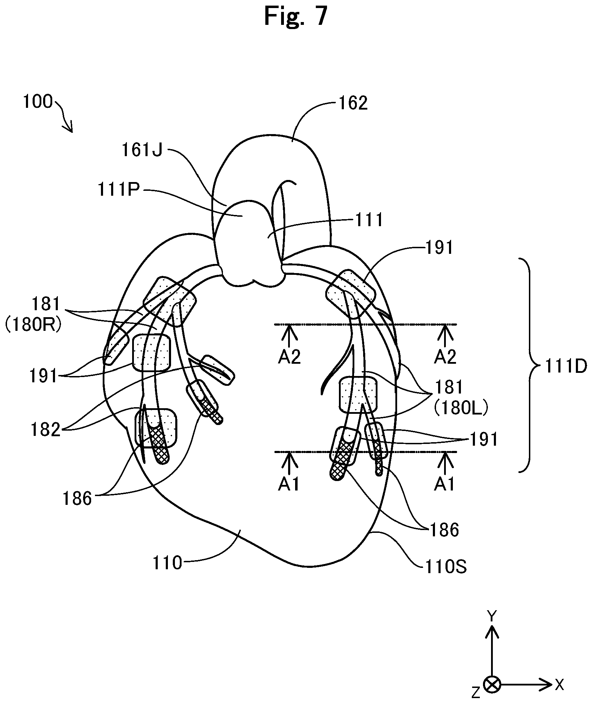

Figs. 6 and 7 show diagrams of the schematic configurations of an organ simulator 100. The organ simulator 100 includes a vascular model as described above (the cardiovascular model 111, the cerebral vascular model 131, the hepatic vascular model 141, the lower-limb vascular model 151) configured as a blood vessel arranged around on the surface of an organ model (the heart model 110, the brain model 130, the liver model 140, the lower-limb model 150), in which the course of dense-staining in X-ray images to be obtained during use of a contrast agent in the vascular model can simulate that observed in the actual human body. Below, an example of the organ simulator 100 (a heart simulator) will be described where the cardiovascular model 111 is used as a vascular model, and the heart model 110 is used as an organ model.

The organ simulator 100 according to the present embodiment includes the heart model 110, the cardiovascular model 111, and a fixing member 191. It is noted that the XYZ axes orthogonally intersecting to each other are shown in Figs. 6 and 7. The X-axis corresponds to the lateral direction (the width direction) of the heart model 110, and the Y-axis corresponds to the height direction of the heart model 110, and the Z-axis corresponds to the depth direction of the heart model 110. In Figs. 6 and 7, the upper side (the +Y axis direction) corresponds to a "proximal side", and the lower side (the -Y axis direction) corresponds to a "distal side." In the following descriptions, the proximal side (the +Y axis direction) may also be referred to a "proximal end side," and the end portion of the proximal side may also be referred to a "proximal end portion" or simply a "proximal end." Similarly, the distal side (the -Y axis direction) may also be referred to a "distal end side," and the end portion of the distal side may also be referred to as a "distal end portion" or simply a "distal end." In Figs. 6 and 7, the inner cavity 110L of the heart model 110, the tubular body 115, and the first connection portion 162J as described above are not shown.

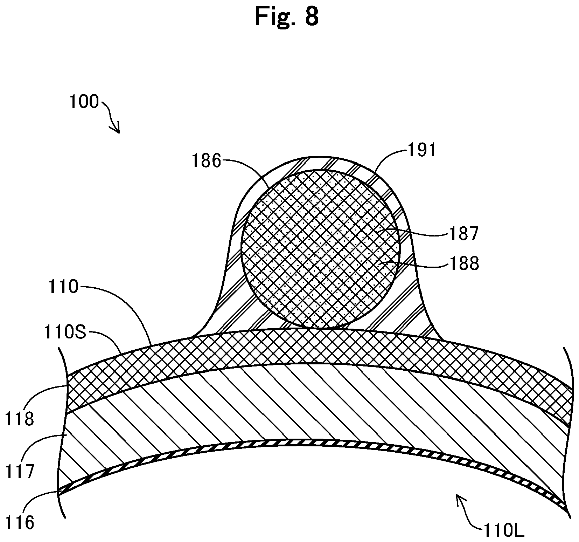

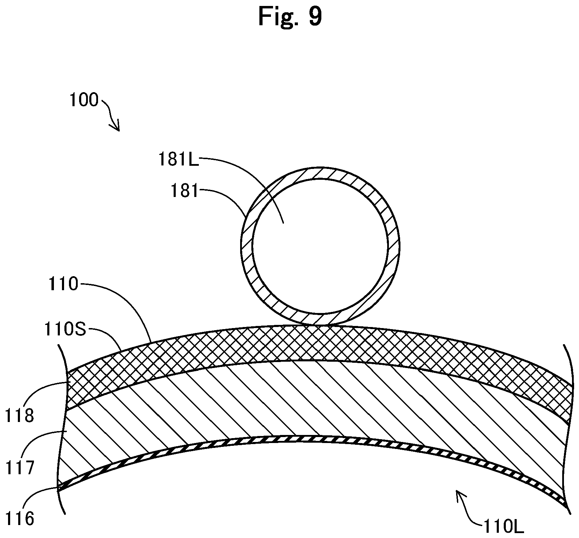

Fig. 8 shows a cross-sectional view along the A1-A1 line in Fig. 7. Fig. 9 shows a cross-sectional view along the A2-A2 line in Fig. 7. It is noted that in Figs 8 and 9, an enlarged cross-sectional view of a portion of the heart model 110 having a substantially spherical shape and only one branch (a portion) of the cardiovascular model 111 arranged on the surface of the heart model 110 are shown for the purpose of illustration.

With reference to Figs. 6 and 8, the configuration of the heart model 110 will be described. As shown in Fig. 6, the heart model 110 has an outer shape which simulates the actual heart. It is noted that the heart model 110 according to the present embodiment has a three-layer structure of a balloon 116, a simulated myocardium 117, and a surface layer 118 as shown in Fig. 8. The balloon 116 is a spherical body arranged at the innermost of the heart model 110, and has the inner cavity 110L thereinside for discharging and withdrawing an expansion medium. The balloon 116 can be formed with a rubber having elasticity, a thermoplastic elastomer (TPE), or the like. The simulated myocardium 117 is arranged between the balloon 116 and the surface layer 118, and covers a surface of the balloon 116. The simulated myocardium 117 is formed with a synthetic resin (for example, PVA, silicone, and the like) of a radiolucent soft material. The surface layer 118 is arranged at the outermost of the heart model 110, and covers a surface of the simulated myocardium 117. The surface layer 118 is a layer of a porous body having a plurality of pores, which may be formed with, for example, a nonwoven fabric such as a nylon nonwoven fabric, or for example, a foam body such as polyurethane foam, polyamide form, polyethylene foam, silicone foam, and rubber sponge.

With reference to Figs. 6 and 9, the configuration of the cardiovascular model 111 will be described. As shown in Fig. 6, the cardiovascular model 111 is arranged on a surface 110S of the heart model 110. The cardiovascular model 111 is configured so that a proximal end 111P simulates a part of the ascending aorta, and a distal end 111D simulates either the right or left coronary artery, and has a distal end portion in which a diffusion portion 186 is disposed. Hereinafter, a portion simulating the left coronary artery may also be referred to as a left coronary artery model 180L, and a portion simulating the right coronary artery may also be referred to as a right coronary artery model 180R in the cardiovascular model 111. Moreover, the left coronary artery model 180L and the right coronary artery model 180R may also be collectively referred to as a coronary artery model 180.

The coronary artery model 180 has a main branch portion 181, a side branch portion 182, a connection portion 183, and a branched portion 184. The main branch portion 181 simulates a main blood vessel among the coronary arteries, and the side branch portion 182 simulates a thin blood vessel extending from the main branch portion 181. As shown in Fig. 9, the main branch portion 181 and the side branch portion 182 are tubular bodies which have inner cavities 181L and 182L, respectively, and are formed with a synthetic resin (for example, PVA, silicone, and the like) of a radiolucent soft material as described above. In the connection portion 183 (Fig. 6: a dot-and-dash line), one main branch portion 181 and another main branch portion 181 are connected so that the inner cavities 181L thereof are in communication with each other. This connection can be achieved by various means. For example, the main branch portions 181 may be held together with a retainer such as a clip, or the branch portions 181 may be fixed together with an adhesive, or the main branch portions 181 may be covered with a synthetic resin. In the branched portion 184 (Fig. 6: a broken line), one main branch portion 181 is branched to a plurality of main branch portions 181 as in the actual human body.

As indicated by the arrows in Fig. 6, a fluid (a blood simulate or a contrast agent) flowing from the inner cavity 111L of the cardiovascular model 111 bifurcates into the left coronary artery model 180L and the right coronary artery model 180R, and is passed through the inner cavities 181L of the main branch portions 181 toward the distal end side in each of the coronary artery models 180. The fluid flows to the distal end of each of the main branch portions 181 and each of the side branch portions 182 via the branched portions 184 on its way. As described above in the present embodiment, the main branch portions 181 and the side branch portions 182 each function as a "flow path forming portion" which forms a fluid flow path extending in the extension direction of the cardiovascular model 111 (a vascular model).

With reference to Figs. 7 and 8, the diffusion portion 186 will be described. In the cardiovascular model 111 according to the present embodiment, the diffusion portion 186 is disposed at the distal end portion of each of the main branch portions 181 which constitute flow path forming portions. The diffusion portion 186 has a solid and substantially column-like shape having a diameter substantially same as that of the corresponding main branch portion 181. The length of the diffusion portion 186 in the extension direction (the Y axis direction in Fig. 7) may be appropriately selected depending on a desired diffusion performance of a contrast agent. As shown in Fig. 7, the diffusion portion 186 is arranged so as to face the inner cavity 181L (a fluid flow path) of the main branch portion 181 at the distal end portion of the main branch portion 181. Further, as shown in Fig. 8, the diffusion portion 186 is arranged so as to be adjacent to the surface layer 118 of the heart model 110. The distal end portion of the main branch portion 181 and the proximal end portion of the diffusion portion 186 are fixed through the fixing member 191 described below. It is noted that at least a portion of the diffusion portion 186 may be fit into the inner cavity 181L of the main branch portion 181.

As shown in Fig. 8, the diffusion portion 186 according to the present embodiment includes a porous body 187 and an elastic body 188. The porous body 187 is a porous member having a plurality of pores, which may be formed with, for example, a nonwoven fabric such as a nylon nonwoven fabric, or for example, a foam body such as polyurethane foam, polyamide form, polyethylene foam, silicone foam, and rubber sponge. In the porous body 187 according to the present embodiment, the density of the pores is substantially uniform from a proximal end side (the +Y axis direction in Fig. 6) through a distal end side (the -Y axis direction in Fig. 6). The elastic body 188 is an elastic member filled in each of the pores of the porous body 187. Filling of the porous body 187 with the elastic body 188 can be achieved by, for example, pouring an elastic body material such as liquefied PVA, polyurethane-containing elastomer, and rubber into the porous body 187. Alternatively, the porous body 187 may be impregnated with a liquefied elastic body material to achieve filling of the porous body 187 with the elastic body 188.

The fixing member 191 is a member for fixing various portions of the cardiovascular model 111, i.e., the main branch portion 181, the side branch portion 182, and the diffusion portion 186, to the surface 110S (the surface layer 118) of the heart model 110. As shown in Fig. 7, a plurality of fixing members 191 are disposed in the organ simulator 100 according to the present embodiment. The positions and number of the fixing members 191 to be disposed may be appropriately selected. However, the fixing members 191 are each preferably disposed at the branched portion 184 subject to a higher external force and pressure inside of a fluid flow path than other sites, the side branch portion 182 located at the distal end of a fluid flow path, and the distal end portion of the main branch portion 181 where the diffusion portion 186 is disposed. Further, as shown in Fig. 8, the fixing member 191 according to the present embodiment is disposed so as to cover the entire surface of the cardiovascular model 111 (the main branch portion 181 in an example shown in the figure) except for a contacting portion with the surface layer 118 of the heart model 110. The first fixing member 191 is formed with a synthetic resin (for example, PVA; silicone; polyurethane; polysaccharides such as carrageenan; and the like) of a radiolucent soft material.

When treatment or examination using a catheter is simulated with the human body simulating apparatus 1 according to the present embodiment, angiography may be used in order to determine hemodynamics such as blood flow velocity and blood viscosity or an occluded state of a blood vessel. Angiography may be performed as follows: a catheter is inserted into a blood vessel, for example, from the common iliac aorta portion 164 (Fig. 5), and delivered to the cardiovascular model 111 through the inner cavity 160L of the aortic model 160. A low-radiolucent contrast agent is then injected through the catheter to perform radiography. An operator can determine hemodynamics and vascular conditions by investigating changed contrast in the resulting X-ray images (still pictures or video images, which may also be referred to as "cineradiographic images") to elucidate how the contrast agent flows.

Here in the organ simulator 100 according to the present embodiment, the cardiovascular model 111 (a vascular model) includes the diffusion portion 186 formed with the porous body 187 and disposed so as to face a fluid flow path (the inner cavity 181L of the main branch portion 181) extending in the extension direction of the cardiovascular model 111, the diffusion portion 186 being for excreting a fluid (a blood simulate or a contrast agent) flowing through the fluid flow path from the pores of the porous body 187 to the outside in a diffused manner. In other words, the diffusion portion 186 formed with the porous body 187 can function as a diffusive flow path (a buffering flow path) for dispersing the pressure and flow rate of a contrast agent flowing into the fluid flow path. In the cardiovascular model 111 according to the present embodiment, the course of dense-staining to be observed in X-ray images of the actual human body (specifically, a way in which a contrast agent spreads along arterioles, and then diffuses over arterioles to disappear) can therefore be simulated in X-ray images to be obtained during use of a contrast agent.

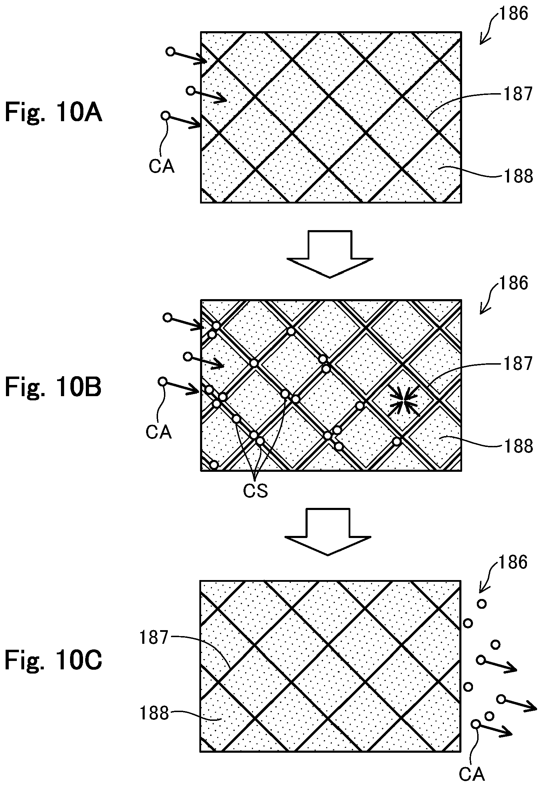

Fig. 10 is diagram illustrating how the contrast agent CA is diffused. Figs. 10A and 10C show the appearance of the diffusion portion 186 when the pressure inside a fluid flow path is low, and Fig. 10B shows the appearance of the diffusion portion 186 when the pressure inside the fluid flow path is high. The pores of the porous body 187 in the diffusion portion 186 according to the present embodiment are filled with the elastic body 188. This enables the elastic body 188 to block each of the pores of the porous body 187 as shown in Fig. 10A, for example, while a blood simulate alone circulates through the aortic model 160, and the pressure inside the cardiovascular model 111 (the inner cavity 181L of the main branch portion 181) is low.

When the pressure inside the cardiovascular model 111 (the inner cavity 181L of the main branch portion 181) is increased by injecting the contrast agent CA into the cardiovascular model 111, then the elastic body 188 can be compressed in the directions indicated by the arrows in the figure, and undergo deformation to create fine gaps between the pores of the porous body 187, thereby opening each of the pores of the porous body 187 as shown in Fig. 10B. This enables the contrast agent CA to be excreted through each of the opened pores in a more finely diffused manner. As a result of this, the course of dense-staining in X-ray images to be obtained during use of the contrast agent (diffusing and disappearing images) can simulate the actual human body more closely.

After the injection of the contrast agent CA is completed, the pressure inside the cardiovascular model 111 (the inner cavity 181L of the main branch portion 181) again becomes low, and the elastic body 188 then blocks each of the pores of the porous body 187 as shown in Fig. 10C. This can present backflow of a fluid or the contrast agent CA present outside the vascular model into the fluid flow path (the inner cavity 181L of the main branch portion 181) through each of the pores of the porous body when the organ simulator 100 and the cardiovascular model 111 (a vascular model) are used, for example, under a wet condition where the organ simulator 100 and the cardiovascular model 111 are immersed into a fluid (water, physiological saline, and the like).

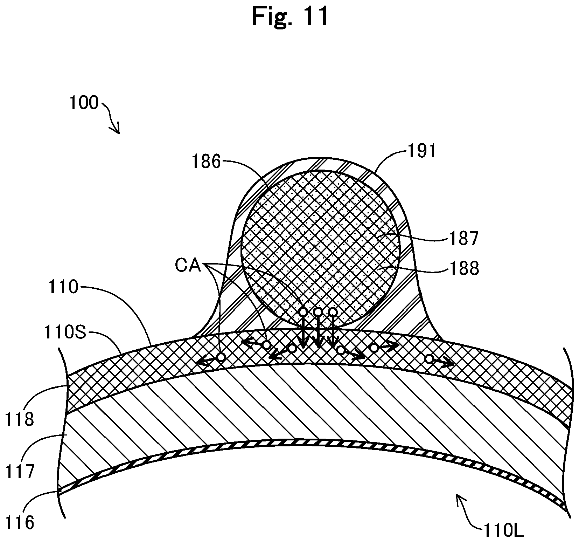

Fig. 11 is a diagram illustrating how the contrast agent CAis diffused. The diffusion portion 186 according to the present embodiment is arranged so as to be adjacent to the surface layer 118 of the heart model 110 (an organ model). This can direct the contrast agent CA excreted to the outside through the diffusion portion 186 to the surface layer 118 of the heart model 110 as shown in Fig. 11. Here, the surface layer 118 of the heart model 110, which is formed with the porous body, can function as a diffusive flow path (a buffering flow path) for further dispersing the pressure and flow rate of the incoming contrast agent CA. The organ simulator 100 according to the present embodiment where the contrast agent CA is diffused and excreted at both the diffusion portion 186 of the cardiovascular model 111 (a vascular model) and the surface layer 118 of the heart model 110 enables the contrast agent CA to be diffused and excreted in a more finely diffused manner, and also enables the course of dense-staining in X-ray images to be obtained during use of the contrast agent to simulate the actual body more closely.

Further, in the organ simulator 100 according to the present embodiment where the diffusion portion 186 is disposed at the distal end portion of the flow path forming portion (the main branch portion 181 of a tubular body), the course of dense-staining in X-ray images to be obtained during use of a contrast agent can be simulated by the distal end portion of the fluid flow path (the inner cavity 181L of the main branch portion 181). Further, according to the organ simulator 100, the cardiovascular model 111 (a vascular model) can be fixed to the surface 110S of the heart model 110 (an organ model) through the fixing member 191. Therefore, the heart model 110 and the cardiovascular model 111 can be maintained in a desired relative position.

Moreover, the organ simulator 100 according to the present embodiment can provide an organ simulator in which the cardiovascular model 111 (a vascular model) is configured as a blood vessel arranged around on the surface of the heart model 110 (an organ model). The cardiovascular model 111 is to be arranged on the surface 110S of the heart model 110. This can improve the degree of freedom for designing the heart model 110. For example, the inner cavity 110L of the heart model 110 may be used for a different purpose other than the purpose for diffusing a contrast agent, or the heart model 110 may be configured to be solid. Further, the heart model 110 can pulsate as in the actual human body by virtue of the pulsating unit 60 for discharging and withdrawing an expansion medium to and from the inner cavity 110L of the heart model 110 in the organ simulator 100 according to the present embodiment. This enables the course of dense-staining in X-ray images to be obtained during use of a contrast agent to simulate the actual living body much more closely, and also improve user's feeling of operations of the organ simulator 110.

### Second embodiment

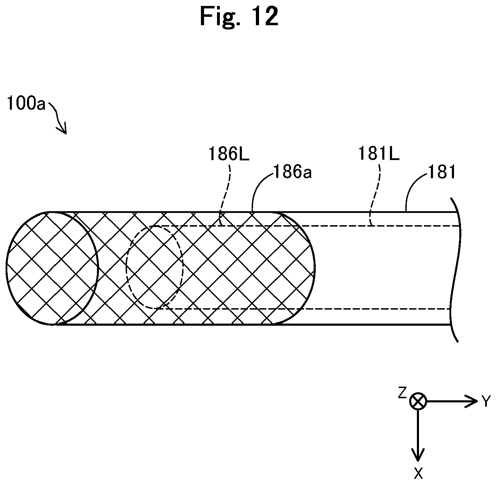

Fig. 12 shows a diagram of a schematic configuration of a diffusion portion 186a according to a second embodiment. In the first embodiment described with reference to Fig. 7, the diffusion portion 186 is solid and has a substantially column-like shape. However, the diffusion portion 186a according to the second embodiment has a substantially cylindrical shape with a closed bottom in which a portion at the proximal end side (the +Y axis direction) in contact with the main branch portion 181 is hollow, and a portion at the distal end side (the -Y axis direction) is solid in the extension direction (the Y axis direction). As described above, the shape of the diffusion portion 186a can be altered in an appropriate manner. Any shape may be used such as a substantially polygonal column-like shape other than the substantially column-like shape and the substantially cylindrical shape. The organ simulator 100a according to the second embodiment as described above can also show similar effects as the first embodiment.

### Third embodiment

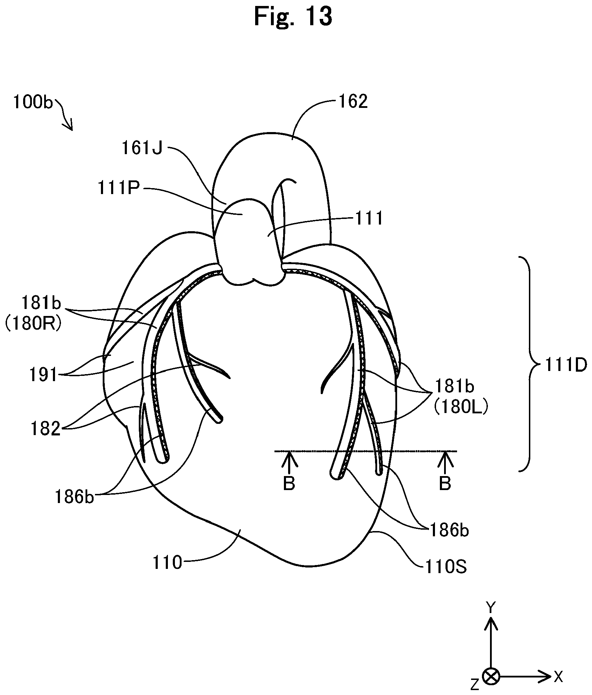

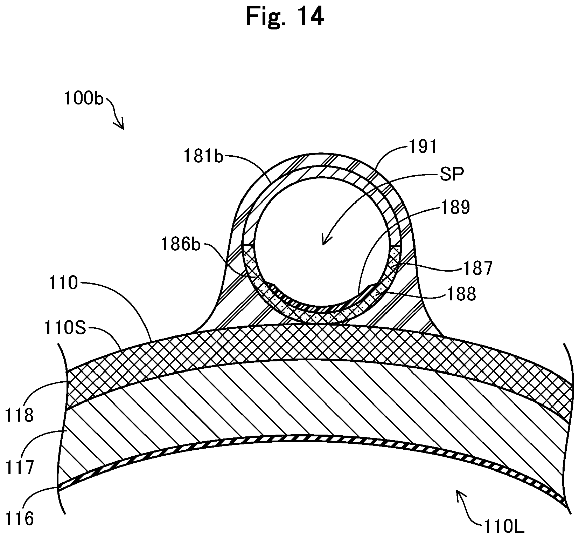

Fig. 13 shows a diagram of a schematic configuration of an organ simulator 100b according to a third embodiment. In Fig. 13, the fixing member 191 is not shown for the purpose of illustration. Fig. 14 shows a cross-sectional view along the B-B line in Fig. 13. In the first embodiment described with reference to Fig. 7, the main branch portion 181 is a tubular body, and the diffusion portion 186 is arranged so as to face the inner cavity 181L (a fluid flow path) of the main branch portion 181 at the distal end portion of the main branch portion 181. In contrast, a main branch portion 181b according to the third embodiment is a groove body with a substantially semi-cylindrical shape extending in the extension direction of the cardiovascular model 111 (Fig. 13) and having an opening SP formed at about half of a circumferential direction (Fig. 14). Further, the diffusion portion 186b is a groove body with a substantially semi-cylindrical shape extending in the extension direction of the cardiovascular model 111 (Fig. 13) and having an opening formed at about half of a circumferential direction (Fig. 14) as in the main branch portion 181b.

As shown in Fig. 14, the diffusion portion 186b is arranged so as to be adjacent to the surface layer 118 of the heart model 110. The main branch portion 181b is arranged so as to cover the diffusion portion 186b, and the main branch portion 181b as a groove body is arranged so as to abut on the diffusion portion 186b through their end faces to form a cylindrical structure. The fixing member 191 fixes the main branch portion 181b and the diffusion portion 186b. In the third embodiment, the inner cavity formed by the main branch portion 181b and the diffusion portion 186b functions as a fluid flow path. That is, the diffusion portion 186b as well as the main branch portion 181b can function as a flow path forming portion in the third embodiment. The organ simulator 100b according to the third embodiment as described above can also show similar effects as the first embodiment. Further, in the organ simulator 100b according to the third embodiment, the diffusion portion 186b is disposed so as to face the opening of the main branch portion 181b (a groove body) serving as a flow path forming portion. Therefore, the course of dense-staining in X-ray images to be obtained during use of a contrast agent can be simulated by the entire region of the fluid flow path as shown in Fig. 13.

The organ simulator 100b according to the third embodiment further includes a coat layer 189. As shown in Fig. 14, the coat layer 189 is a coating applied on the bottom of the diffusion portion 186b serving as a flow path forming portion. As the coat layer 189, a synthetic resin (for example, PVA, silicone, urethane, and the like) having radiolucency and high lubricity (slidability) is preferably used. It is noted that the coat layer 189 may be disposed on at least a portion of a fluid flow path, for example, may be disposed on at least a portion other than the bottom of the diffusion portion 186b, or on the entire circumference of an inner cavity (a fluid flow path) defined by the diffusion portions 186b and the main branch portions 181b. Further, a through-hole (that is, a non-coating portion) for improving diffusion and excretion performance of a contrast agent from the diffusion portion 186b to the surface layer 118 may be disposed at the coat layer 189. The through-hole may have any shape such as a substantially circular shape, a substantially polygonal shape, and a slit-like shape.

According to the above configuration, at least a portion of the fluid flow path extending in the extension direction of the cardiovascular model 111 (a vascular model) is coated with the coat layer 189 at the flow path forming portion (the diffusion portion 186b, the main branch portion 181b). This enables the sliding resistance in the fluid flow path to simulate the actual living body (a blood vessel) more closely, and enables a medical device to smoothly move forward through the fluid flow path.

### Fourth embodiment

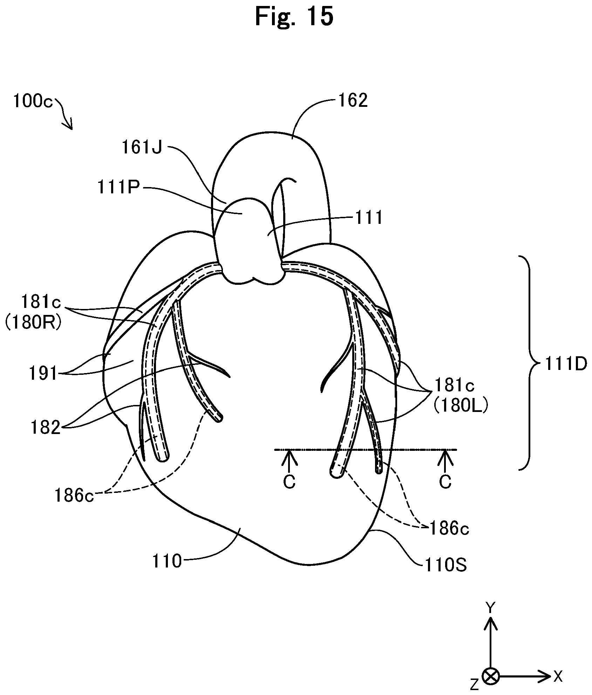

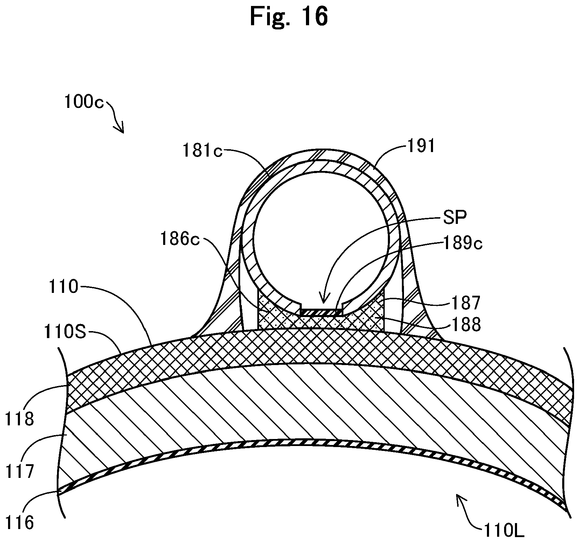

Fig. 15 shows a diagram of a schematic configuration of an organ simulator 100c according to a fourth embodiment. In Fig. 15, the fixing member 191 is not shown for the purpose of illustration. Fig. 16 shows a cross-sectional view along the C-C line in Fig. 15. In the third embodiment described with reference to Figs. 13 and 14, illustrated are the main branch portion 181b and the diffusion portion 186b each having a semi-cylindrical shape. In contrast, the main branch portion 181c according to the fourth embodiment is a groove body with a substantially C-shaped cross section extending in the extension direction of the cardiovascular model 111 (Fig. 15) and having the opening SP formed in at least a portion of the circumferential direction (Fig. 16). Further, the diffusion portion 186c is a groove body extending in the extension direction of the cardiovascular model 111 (Fig. 15: a broken line) and having a cross-sectional shape configured so as to engage with an outer rim in the vicinity of the opening SP of the main branch portion 181c (Fig. 16). As shown in Fig. 16, the diffusion portion 186c is arranged so as to be adjacent to the surface layer 118 of the heart model 110. The main branch portion 181c is placed at the diffusion portion 186c so that the opening SP faces the diffusion portion 186c. The fixing member 191 fixes the main branch portion 181c and the diffusion portion 186c. Again, in the fourth embodiment, an inner cavity defined by the main branch portion 181c and the diffusion portion 186c can function as a fluid flow path as in the third embodiment. That is, the diffusion portion 186c as well as the main branch portion 181c can function as a flow path forming portion in the fourth embodiment.

The organ simulator 100c according to the fourth embodiment further includes a coat layer 189c. As shown in Fig. 16, the coat layer 189c is a coating applied so as to cover the diffusion portion 186c at a portion exposed toward the fluid flow path through the opening SP of the main branch portion 181c. The configuration and material of the coat layer 189c may be the same as or different from those of the coat layer 189 according to the third embodiment. As described above, the shape of the main branch portion 181c, the shape of the diffusion portion 186c, and the aspect of the coated layer 189c may be altered appropriately. The organ simulator 100c according to the fourth embodiment as described above can also show similar effects as the first and third embodiments.

### Fifth embodiment

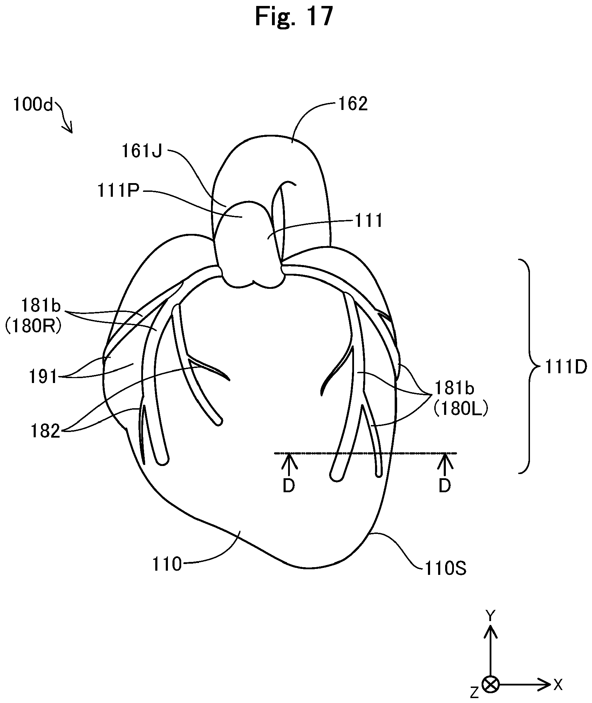

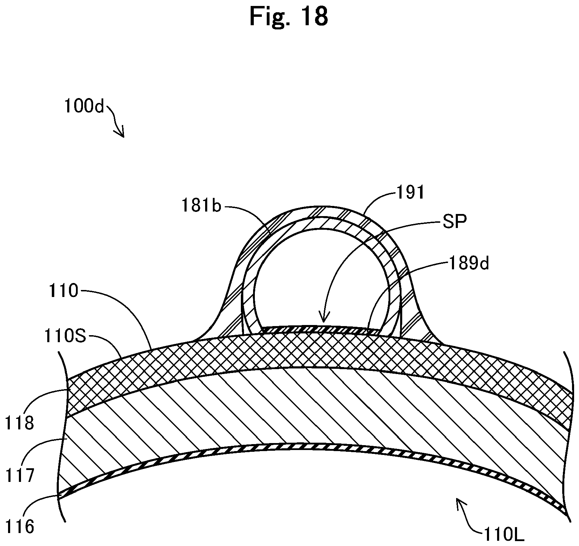

Fig. 17 shows a diagram of a schematic configuration of an organ simulator 100d according to a fifth embodiment. In Fig. 17, the fixing member 191 is not shown for the purpose of illustration. Fig. 18 shows a cross-sectional view along the D-D line in Fig. 17. In the third embodiment described with reference to Figs. 13 and 14, illustrated is a configuration where the main branch portion 181b and the diffusion portion 186b each having a substantially semi-cylindrical shape are combined to form a fluid flow path. In contrast, the organ simulator 100d according to the fifth embodiment does not include the diffusion portion 186b, but diffusion and excretion of a contrast agent which could be achieved by the diffusion portion 186b can be achieved by the surface layer 118 (a porous body) of the heart model 110. According to the fifth embodiment, the main branch portion 181b is placed on the surface layer 118 so that the opening SP faces the surface layer 118 as shown in Fig. 18. The fixing member 191 fixes the main branch portion 181b. According to the fifth embodiment, an inner cavity defined by the main branch portion 181b and the surface layer 118 of the heart model 110 can function as a fluid flow path. That is, the surface layer 118 of the heart model 110 as well as the main branch portion 181b can also function a flow path forming portion in the fifth embodiment.

The organ simulator 100d according to the fifth embodiment further includes a coat layer 189d. As shown in Fig. 18, the coat layer 189d is a coating applied so as to cover the surface layer 118 of the heart model 110 at a portion exposed toward a fluid flow path through the opening SP of the main branch portion 181b. The configuration and material of the coat layer 189d may be the same as or different from those of the coat layer 189 according to the third embodiment. As described above, the diffusion portion 186b may be omitted, and diffusion and excretion of a contrast agent may be achieved by the surface layer 118 of the heart model 110. The organ simulator 100d according to the fifth embodiment as described above can also show similar effects as the first and third embodiments.

### Sixth embodiment

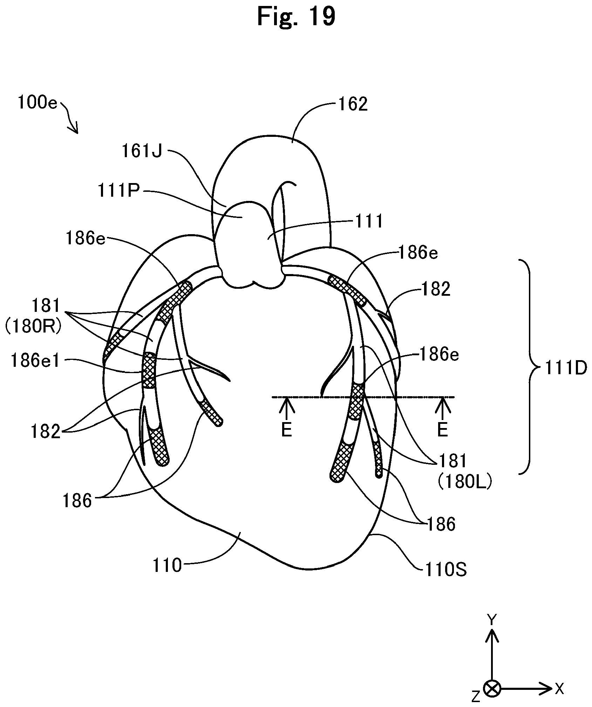

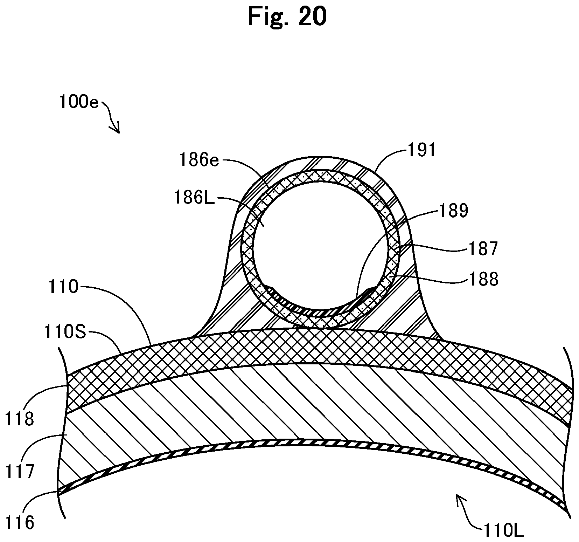

Fig. 19 shows a diagram of a schematic configuration of an organ simulator 100e according to a sixth embodiment. In Fig. 19, the fixing member 191 is not shown for the purpose of illustration. Fig. 20 shows a cross-sectional view along the E-E line in Fig. 19. In the first embodiment described with reference to Fig. 7, the diffusion portion 186 is arranged at the distal end portion of the main branch portion 181. In contrast, the organ simulator 100e according to the sixth embodiment further includes a diffusion portion 186e in addition to the diffusion portion 186 arranged at the distal end portion of the main branch portion 181. With reference to Figs. 19 and 20, the diffusion portion 186e will be described. As shown in Fig. 19, the diffusion portion 186e is arranged at the branched portion 184 (Fig. 6) in which one main branch portion 181 is branched into a plurality of main branch portions 181. As shown in Fig. 20, the diffusion portion 186e has a follow cylindrical shape having a diameter substantially same as that of the main branch portion 181, and an inner cavity 186L of the diffusion portion 186e can function as a fluid flow path as in the inner cavity 181L of the main branch portion 181. That is, the diffusion portion 186e as well as the main branch portion 181 can function as a flow path forming portion in the sixth embodiment. The diffusion portion 186e includes the porous body 187 and the elastic body 188 filled in the pores of the porous body 187 as in the diffusion portion 186. The length of the diffusion portion 186e in the extension direction can be appropriately selected depending on required diffusion performance of a contrast agent as in the main branch portion 181. Further, the coat layer 189 as described in the third embodiment is disposed at the bottom of the porous body 187e.

As described above, the organ simulator 100e may further include the diffusion portion 186e disposed at the branched portion 184 of the main branch portion 181 in addition to the diffusion portion 186 disposed at the distal end portion of the main branch portion 181. Further, the organ simulator 100e may include a diffusion portion 186e1 disposed at a portion (an extension portion without having a branch) which corresponds to neither the distal end portion nor a branched portion of the main branch portion 181. The diffusion portion 186e1 has a similar configuration as the diffusion portion 186e. Further, the organ simulator 100e does not need to include at least any one of the diffusion portions 186, the diffusion portion 186e, and the diffusion portion 186e1. The organ simulator 100e according to the sixth embodiment as described above can also show similar effects as the first embodiment. Moreover, in the organ simulator 100e according to the sixth embodiment where the diffusion portion 186e is disposed at the branched portion 184 in which a flow path forming portion (the main branch portion 181 of a tubular body) is branched, the course of dense-staining in X-ray images to be obtained during use of a contrast agent can be simulated by the branched portion of the fluid flow path.

### Seventh embodiment

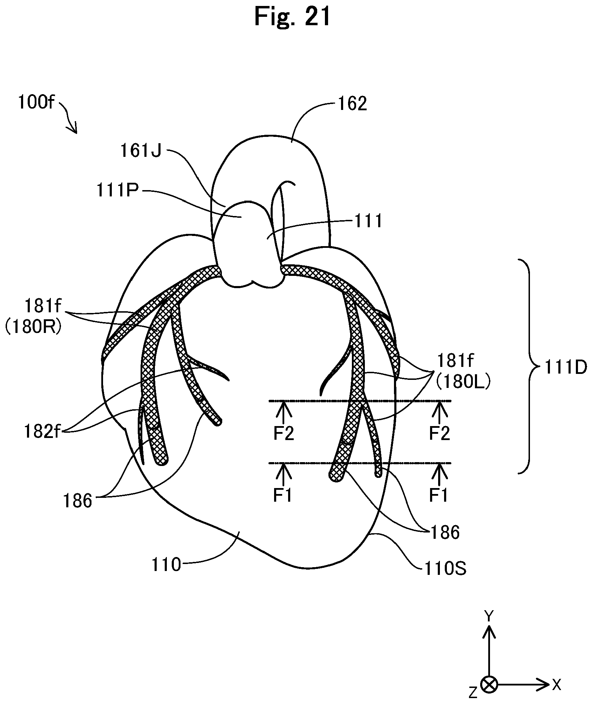

Fig. 21 shows a diagram of a schematic configuration of an organ simulator 100f according to a seventh embodiment. In Fig. 21, the fixing member 191 is not shown for the purpose of illustration. In the first embodiment described with reference to Fig. 7, the main branch portion 181 and the side branch portion 182 are each a tubular body formed with a synthetic resin of a soft material. In contrast, a main branch portion 181f and a side branch portion 182f of the organ simulator 100f according to the seventh embodiment are configured as porous bodes. The main branch portion 181f and the side branch portion 182f may be made of the same material as the porous body 187 of the diffusion portion 186, or may be made of a different material. Further, each of the pores of the main branch portion 181f and the side branch portion 182f formed with porous bodies may be filled with a resin. The above resin may be the same as or different from the elastic body 188 of the diffusion portion 186.

The organ simulator 100f as described above has a cross-sectional view along the F1-F1 line which is similar to a cross-sectional view of the first embodiment described with reference to Fig. 8. On the other hand, a cross-sectional view along the F2-F2 line is similar to that of the sixth embodiment described with reference to Fig. 20. Here, the diffusion portion 186e (Fig. 20) corresponds to the main branch portion 181f, and the inner cavity 186L (Fig. 20) corresponds to the inner cavity 181L. As described above, the material(s) of the main branch portion 181f and the side branch portion 182f may be altered appropriately, and they may be configured as porous bodies as in the diffusion portion 186 described in the first embodiment. The organ simulator 100f according to the seventh embodiment as described above can also show similar effects as the first embodiment. Further, in the organ simulator 100f according to the seventh embodiment, the flow path forming portion (the main branch portion 181f) is formed with a porous body, and thus can function as a diffusion portion for excreting a fluid flowing through the fluid flow path (the inner cavity 181L) from the pores of the porous body to the outside in a diffused manner.

### Eighth embodiment

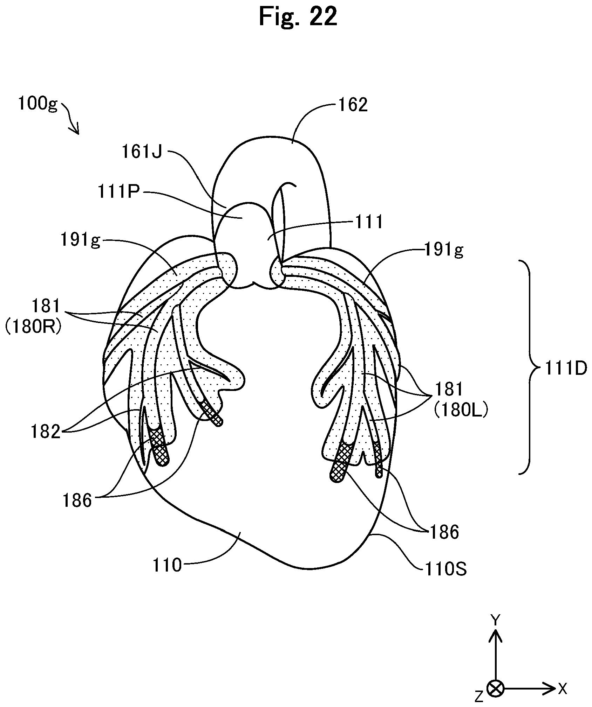

Fig. 22 shows a diagram of a schematic configuration of an organ simulator 100g according to an eighth embodiment. In the first embodiment described with reference to Fig. 7, the distal end portion of the main branch portion 181, the side branch portion 182, and the branched portion 184 are each fixed through the separate fixing members 191. In contrast, the main branch portion 181, the side branch portion 182, and the branched portion 184 are each fixed through the same fixing member 191g in the organ simulator 100g according to the eighth embodiment. The fixing member 191g fixes a portion of the ascending aorta leading to the coronary artery model 180 in the cardiovascular model 111 and the coronary artery model 180 including the main branch portion 181, the side branch portion 182, the branched portion 184, and the diffusion portion 186. In an example shown in the figure, the organ simulator 100g includes a fixing member 191g for fixing the left coronary artery model 180L and a fixing member 191g for fixing the right coronary artery model 180R. Further, a portion of the distal end side of the diffusion portion 186 is not fixed through the fixing member 191g, and the portion of the distal end side of the diffusion portion 186 is exposed. The fixing member 191g may be made of the same material as the first fixing member 191 according the first embodiment, or may be made of a different material.

As described above, the shape and fixing coverage of the fixing member 191g may be altered appropriately. For example, the left coronary artery model 180L and the right coronary artery model 180R may be fixed through a single fixing member 191g. Further, the fixing member 191g may fix the entire of the diffusion portion 186, or does not need to fix the entire of the diffusion portion 186 to enable exposure. The organ simulator 100g according to the eighth embodiment as described above can also show similar effects as the first embodiment.

### Ninth embodiment (Not covered by the present claims)

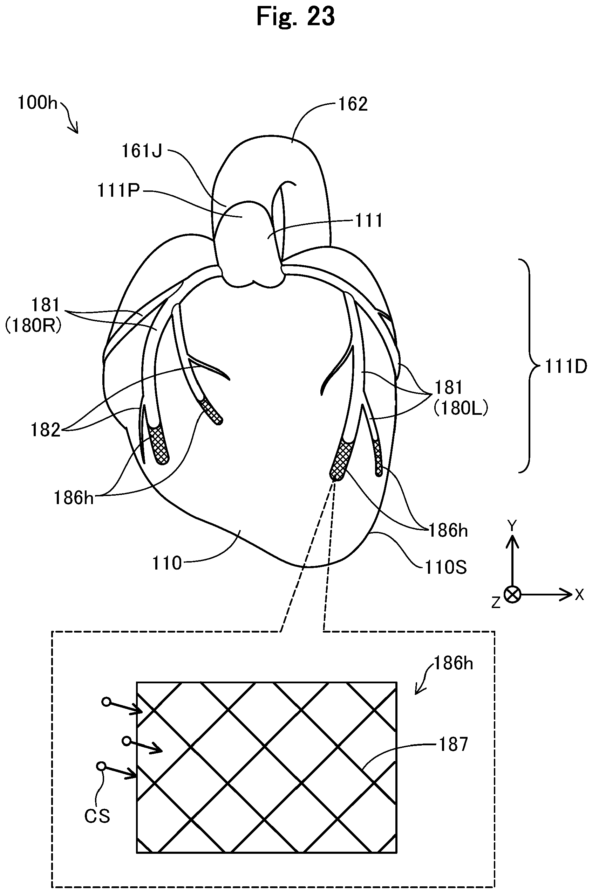

Fig. 23 shows a diagram of a schematic configuration of an organ simulator 100h according to a ninth embodiment (Not covered by the present claims). The insert shown in the lower panel of Fig. 23 shows an enlarged view of a diffusion portion 186h included in the organ simulator 100h. In the first embodiment described with reference to Fig. 7, the pores of the porous body 187 in the diffusion portion 186 is filled with the elastic body 188. In contrast, the diffusion portion 186h according to the ninth embodiment (Not covered by the present claims) does not include the elastic body 188 which fills the pores of the porous body 187. As described above, the diffusion portion 186h can be configured appropriately, and may consist only of the porous body 187. The organ simulator 100h according to the ninth embodiment (Not covered by the present claims) as described above can also show similar effects as the first embodiment.

### Tenth embodiment

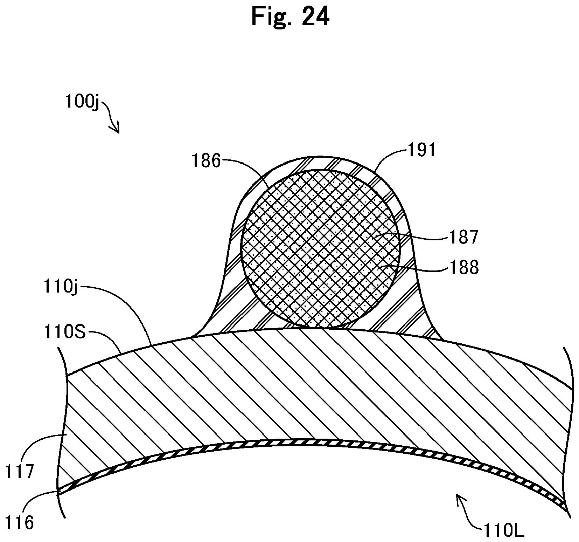

Fig. 24 shows a cross-sectional view along the A1-A1 line (Fig. 7) of an organ simulator 100j according to a tenth embodiment. In the first embodiment described with reference to Figs. 7 and 8, illustrated is a configuration where the heart model 110 has a three-layer structure of the balloon 116, the simulated myocardium 117, and the surface layer 118. In contrast, a heart model 110j according to the tenth embodiment has a two-layer structure of the balloon 116 and the simulated myocardium 117 without having the surface layer 118 of a porous body.

As described above, the configuration of the heart model 110j (an organ model) may be altered appropriately. At least a part of the layers may be omitted, or an additional member not described above may be included. For example, the heart model 110 may have a single-layer structure of the simulated myocardium 117. In that case, the inner cavity 110L may be omitted, or the inner cavity 110L may be formed at the inner side of the simulated myocardium 117. For example, the heart model 110 may have a two-layer structure of the simulated myocardium 117 and the surface layer 118. Again, in that case, the inner cavity 110L may be omitted, or the inner cavity 110L may be formed in the inner side of the simulated myocardium 117. The organ simulator 100j according to the tenth embodiment as described above can also show similar effects as the first embodiment.

### Eleventh embodiment

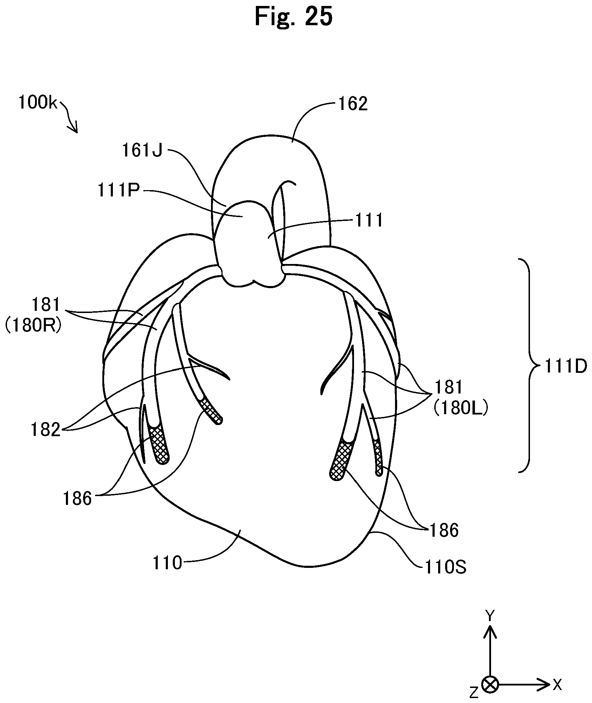

Fig. 25 shows a diagram of a schematic configuration of an organ simulator 100k according to an eleventh embodiment. In the first embodiment described with reference to Fig. 7, illustrated is a configuration where the cardiovascular model 111 (specifically, the main branch portion 181, the side branch portion 182, the diffusion portion 186) is fixed through the fixing member 191. In contrast, the organ simulator 100k according to the eleventh embodiment does not include the fixing member 191, and the cardiovascular model 111 is not fixed to the heart model 110. As described above, it is possible to omit the fixing member 191. The organ simulator 100k according to the eleventh embodiment as described above can also show similar effects as the first embodiment.

### Twelfth embodiment

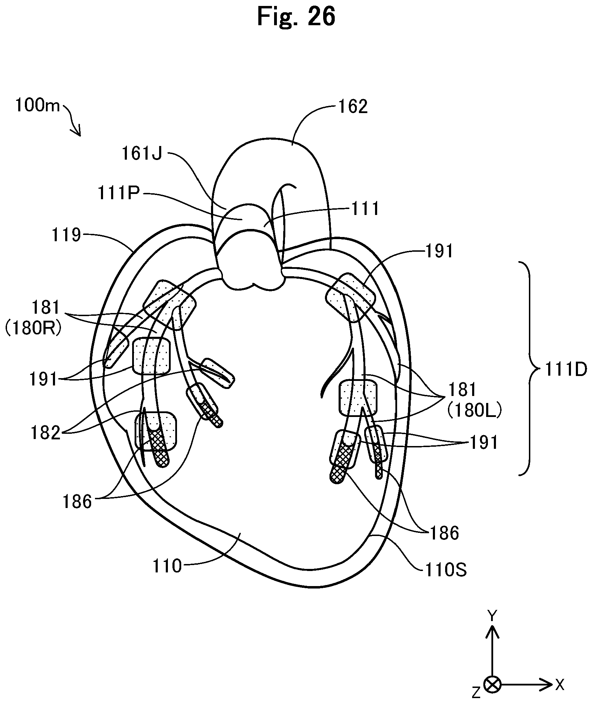

Fig. 26 shows a diagram of a schematic configuration of an organ simulator 100m according to a twelfth embodiment. The organ simulator 100m according to the twelfth embodiment further includes a pericardium portion 119 in addition to each of the structures of the first embodiment described with reference to Fig. 7. The pericardium portion 119 is a member with a film-like shape covering the surface 110S of the heart model 110. The pericardium portion 119 is a member having a pouch-like shape formed with a synthetic resin (for example, silicone and the like) of a radiolucent soft material. The cardiovascular model 111 (a vascular model) as described above is housed in a space between an inner surface of the pericardium portion 119 and the surface 110S of the heart model 110. It is noted that an excretion outlet for excreting a contrast agent or a blood simulate excreted from the diffusion portion 186 may be formed at the pericardium portion 119. The excretion outlet is preferably disposed in the vicinity of the distal end side (the apex) of the heart model 110 or at a side where the heart model 110 faces the aortic model 160 in the pericardium portions 119.

As described above, the organ simulator 100m may further include various structures not described above. The organ simulator 100m according to the twelfth embodiment as described above can also show similar effects as the first embodiments. Further, the organ simulator 100m according the twelfth embodiment enables the pericardium portion 119 with a film-like shape covering the surface 110S of the heart model 110 to simulate the lateral pericardium and fibrous pericardium in the actual living body, and also enables the space between the inner surface of the pericardium portion 119 and the surface 110S of the heart model 110 to simulate the pericardial cavity in the actual living body.

### Variations of present embodiment

The present invention shall not be limited to the above embodiments, but can be practiced according to various aspects without departing from the scope of the present invention. For example, the following variations may also be possible.

### Variation 1

The aforementioned first to twelfth embodiments show examples of the configuration of the human body simulating apparatus 1. However, various modifications may be made to the configuration of the human body simulating apparatus. For example, the human body simulating apparatus does not need to include at least one of the tanks and the cover for covering the tank. For example, the human body simulating apparatus may include an input unit by a means other than a touch screen (for example, sound, an operation dial, a button, and the like).

### Variation 2

The aforementioned first to twelfth embodiments show examples of the configuration of the model 10. However, various modifications may be made to the configuration of the model. For example, the aortic model does not need to include at least a part of the first to the fourth connection portions. For example, the arrangement of the first to fourth connection portions in the aortic model may be altered appropriately. The first connection portion does not need to be arranged at the aortic arch or in the vicinity thereof. Similarly, the second connection portion does not need to be arranged at the ascending aorta or in the vicinity thereof. The third connection portion does not need to be arranged at the abdominal aorta or in the vicinity thereof. The fourth connection portion does not need to be arranged at the common iliac aorta or in the vicinity thereof. For example, any number of biological-model connection portions may be used in the aortic model. Anew biological-model connection portion for connecting a biological model not mentioned above (for example, a stomach model, a pancreas model, a kidney model, and the like) may be included.

For example, the model does not need to include at least a part of the heart model, the lung model, the brain model, the liver model, the lower-limb model, and the diaphragm model. When the lung model and the diaphragm model are omitted, the respiratory movement unit can also be omitted. For example, the model may be configured as a complex further including a bone model simulating at least a portion of a human bone such as rib, sternum, thoracic vertebra, lumbar vertebra, femur, and neckbone. For example, the configurations of the aforementioned heart model, lung model, brain model, liver model, lower-limb model, and diaphragm model may be altered appropriately. For example, the inner cavity of the heart model and the pulsating unit for discharging a fluid to the inner cavity of the heart model may be omitted (Fig. 4). The lung model may include separate inner cavities disposed at each of the right and left lungs (Fig. 4). The lower-limb model may further include a skin model which covers femur muscle (Fig. 5).

### Variation 3

The aforementioned first to twelfth embodiments show examples of the configurations of the organ simulators 100, 100a to 100m. However, various alternations may be made to the configurations of the organ simulators. For example, at least one of an organ model (the heart model, the brain model, the liver model, the lower-limb model) and a vascular model (the cardiovascular model, the cerebral vascular models, the hepatic vascular model, the lower limb vascular model) may have a model simulating a healthy organ or blood vessel and a model simulating an organ or blood vessel having a lesion site, which may be interchangeably attached.

For example, a vascular model (the cardiovascular model, the cerebral vascular model, the hepatic vascular model, the lower limb vascular model) may include a vein-simulating model in addition to an artery-simulating model. For example, a vascular model is configured to include the main branch portion, the side branch portion, the connection portion, and the branched portion. However, these portions other than the main branch portion may be omitted. For example, the side branch portion may be omitted to obtain a flow path forming portion which consists only of the main branch portion. For example, a configuration may be used where the connection portion is omitted, and the main branch portion is integrally formed, and thus the main branch portion can not be detached for replacement. For example, the branched portion may be omitted to obtain a coronary artery model having a main branch portion without a branch.

### Variation 4

The aforementioned first to twelfth embodiments show examples of the configurations of the diffusion portions 186, 186a, 186b, 186c, 186e, and 186h. However, various modifications may be made to the configurations of the diffusion portions. For example, the density of the pores in the porous body included in the diffusion portion may be varied. It may be for example higher at the distal end side (the -Y axis direction in Fig. 6) than at the proximal end side (the +Y axis direction in Fig. 6). For example, the elastic body filled in the pores at the proximal end side may be made of a different material or may have a different property than the elastic body filled in the pores at the distal end side. For example, the diffusion portion is not adjacent to the surface layer of the heart model, but a cavity may be formed between them. For example, the diffusion portion does not need to include the coat layer.

### Variation 5

The configurations of the human body simulating apparatuses and the organ simulators according to the first to twelfth embodiments and the configurations of the human body simulating apparatuses and the organ simulators according to the variations 1 to 4 may be appropriately combined. For example, the organ simulator may include both the diffusion portion disposed at the distal end portion of the main branch portion according to the first embodiment and the diffusion portion disposed so as to face the opening according to any one of the third, fourth, and fifth embodiments. For example, the organ simulator may include both the diffusion portion disposed at the branched portion of the main branch portion according to the second embodiment and the diffusion portion disposed so as to face the opening according to any one of the third, fourth, and fifth embodiments.

In the above, the present aspects are described based on embodiments and variations. However, the embodiments of the aforementioned aspects are provided merely for clear understanding of the present aspects, and should not be construed as limiting to the present aspects. The present aspects include any equivalents thereto. Further, the technical features thereof, if not indicated as essential in the present specification, may be appropriately deleted.

### DESCRIPTION OF REFERENCE NUMERALS

1 Human body simulating apparatus
10 Model
20 Housing
21 Tank
22 Cover
31 Tubular body
40 Control unit
45 Input unit
50 Pulsing unit
51 Tubular body
55 Filter
56 Circulation pump
57 Pulsing pump
60 Pulsating unit
61 Tubular body
70 Respiratory movement unit
71, 72 Tubular body
100, 100a to m Organ simulator
110, 110j Heart model
111 Cardiovascular model
115 Tubular body
116 Balloon
117 Simulated myocardium
118 Surface layer
119 Pericardium portion
120 Lung model
121 Tracheal model
130 Brain model
131 Cerebral vascular model
140 Liver model
141 Hepatic vascular model
150, 150L, R Lower-limb model
151, 151L, R Lower-limb vascular model
160 Aortic model
161 Ascending aorta portion
161J Second connection portion
162 Aortic arch portion
162J First connection portion
163 Abdominal aorta portion
163Ja Third connection portion
163Jb Fluid supplying unit connection portion
164 Common iliac aorta portion
164J Fourth connection portion
170 Diaphragm model
180 Coronary artery model
180L Left coronary artery model
180R Right coronary artery model
181, 181b, c, f Main branch portion
182, 182f Side branch portion
183 Connection portion
184 Branched portion
186, 186a, b, c, e, h Diffusion portion
187, 187e Porous body
188 Elastic body
189, 189c, d Coat layer
190 Flow path forming portion
191, 191g Fixing member

## Claims

1. A vascular model(111;131;141;151), comprising:
a flow path forming portion(181; 181b;181c;181f,182; 182f) for forming a fluid flow path extending in an extension direction of the vascular model; and
a diffusion portion(186; 186a;186b;186c;186e) formed with a porous body(187;187e) and disposed so as to face the fluid flow path, the diffusion portion(186;186a;186b; 186c;186e) being for excreting a fluid flowing through the fluid flow path from pores of the porous body(187;187e) to the outside in a diffused manner; **characterized by** the pores of the porous body in the diffusion portion(186; 186a;186b;186c;186e) are filled with an elastic body(188).

2. The vascular model(111;131;141;151) according to claim 1, wherein:
the flow path forming portion(181,182) is a tubular body(181) extending in the extension direction of the vascular model(111;131;141;151), and
the diffusion portion(186;186a;186e) is disposed at a distal end portion of the tubular body(181).

3. The vascular model(111) according to claim 2, wherein:
the diffusion portion(186) has a solid and columnar shape.

4. The vascular model(111) according to claim 2, wherein:
the diffusion portion(186a) has a cylindrical shape with a hollow proximal end side and a solid closed bottom at a distal end side.

5. The vascular model(111;131;141;151) according to claim 1, wherein:
the flow path forming portion(181,182) is a tubular body(181) extending in the extension direction of the vascular model(111;131;141;151), and
the diffusion portion(186e) is disposed at a branched portion(184) where the tubular body(181) is branched.

6. The vascular model(111;131;141;151) according to any one of claims 1 to 5, wherein:
the flow path forming portion(181; 181b;181c;182) is a groove body extending in the extension direction of the vascular model(111;131;141;151), and having an opening formed in at least a portion of a circumferential direction, and
the diffusion portion(186b; 186c) is disposed so as to face the opening of the groove body.

7. The vascular model(111;131;141;151) according to claim 6, wherein:
the diffusion portion(186b; 186c) is a groove body.

8. The vascular model(111; 131; 141; 151) according to claim 1, wherein:
the flow path forming portion(181f;182f) is formed with a porous body(187; 187e), and functions as a diffusion portion(186) for excreting a fluid flowing through the fluid flow path from pores of the porous body(187; 187e) to the outside in a diffused manner.

9. The vascular model(111;131;141;151) according to any one of claims 1 to 5, wherein:
at least a portion of the fluid flow path in the flow path forming portion(181b; 181c; 181f, 182; 182f) is coated(189; 189c; 189d).

10. An organ simulator(100; 100a; 100b; 100c; 100d; 100e; 100f; 100g; 100h; 100j; 100k; 100m), comprising:
an organ model(110;130;140;150) simulating an organ; and
the vascular model(111; 131; 141; 151) according to any one of claims 1 to 9 arranged on a surface of the organ model(110;130;140;150).

11. The organ simulator(100; 100a; 100b; 100c; 100d; 100e; 100f; 100g; 100h; 100k; 100m) according to claim 10, wherein:
the organ model(110;130;140;150) includes a surface layer(118) formed with a porous body(187; 187e), and
the diffusion portion(186; 186a; 186b; 186c; 186e; 186h) of the vascular model(111; 131; 141; 151) is arranged so as to be adjacent to the surface layer of the organ model(110;130;140;150).

12. The organ simulator(100; 100a; 100b; 100c; 100d; 100e; 100f, 100g; 100h; 100j; 100m) according to claim 10 or 9, further comprising:
a fixing member(191;191g) fixing the vascular model(111;131;141;151) to the surface of the organ model(110;130;140;150).

13. The organ simulator(100; 100a; 100b; 100c; 100d; 100e; 100f, 100g; 100h; 100j; 100k; 100m) according to any one of claims 10 to 12, wherein:
the organ model(110;130;140;150) is a heart model(110) having an inner cavity(110L) and simulating a heart,
the organ simulator(100; 100a; 100b; 100c; 100d; 100e; 100f; 100g; 100h; 100j; 100k; 100m) further comprising a pulsating unit(60) for causing the heart model(110) to pulsate by discharging and withdrawing an expansion medium to and from the inner cavity(110L) of the heart model(110).

14. The organ simulator(100m) according to claim 13, further comprising:
a pericardium portion(119) with a film-like shape covering a surface of the heart model,
the vascular model(111;131;141;151) being housed in a space between an inner surface of the pericardium portion(119) and the surface of the heart model(110).

## Patentansprüche

1. Vaskuläres Modell (111; 131; 141; 151), umfassend:
einen einen Strömungsweg bildenden Abschnitt (181; 181b; 181c; 181f; 182; 182f) zum Bilden eines Fluidströmungsweges, der sich in einer Erstreckungsrichtung des vaskulären Modells erstreckt, und
einen Diffusionsabschnitt (186; 186a; 186b; 186c; 186e), der mit einem porösen Körper (187; 187e) ausgebildet ist und so angeordnet ist, dass er dem Fluidströmungsweg gegenübersteht, wobei der Diffusionsabschnitt (186; 186a; 186b; 186c; 186e) dazu dient, ein durch den Fluidströmungsweg strömendes Fluid aus den Poren des porösen Körpers (187; 187e) durch Diffusion nach außen auszuscheiden, **dadurch gekennzeichnet, dass** die Poren des porösen Körpers in dem Diffusionsabschnitt (186; 186a; 186b; 186c; 186e) mit einem elastischen Körper (188) gefüllt sind.

2. Vaskuläres Modell (111; 131; 141; 151) nach Anspruch 1, wobei:
der den Strömungsweg bildende Abschnitt (181, 182) ein röhrenförmiger Körper (181) ist, der sich in der Erstreckungsrichtung des vaskulären Modells (111; 131; 141; 151) erstreckt, und
der Diffusionsabschnitt (186; 186a; 186e) an einem distalen Endabschnitt des rohrförmigen Körpers (181) angeordnet ist.

3. Vaskuläres Modell (111) nach Anspruch 2, wobei:
der Diffusionsabschnitt (186) eine feste und säulenartige Form aufweist.

4. Vaskuläres Modell (111) nach Anspruch 2, wobei:
der Diffusionsabschnitt (186a) eine zylindrische Form mit einer hohlen proximalen Endseite und einem festen geschlossenen Boden an einer distalen Endseite aufweist.

5. Vaskuläres Modell (111; 131; 141; 151) nach Anspruch 1, wobei:
der den Strömungsweg bildende Abschnitt (181, 182) ein röhrenförmiger Körper (181) ist, der sich in der Erstreckungsrichtung des vaskulären Modells (111; 131; 141; 151) erstreckt, und
der Diffusionsabschnitt (186e) an einem verzweigten Abschnitt (184) angeordnet ist, an dem der rohrförmige Körper (181) verzweigt ist.

6. Vaskuläres Modell (111; 131; 141; 151) nach einem der Ansprüche 1 bis 5, wobei:
der den Strömungsweg bildende Abschnitt (181; 181b; 181c; 182) ein Nutkörper ist, der sich in der Erstreckungsrichtung des vaskulären Modells (111; 131; 141; 151) erstreckt und eine Öffnung aufweist, die in mindestens einem Abschnitt einer Umfangsrichtung gebildet ist, und
der Diffusionsabschnitt (186b; 186c) so angeordnet ist, dass er der Öffnung des Nutkörpers gegenübersteht.

7. Vaskuläres Modell (111; 131; 141; 151) nach Anspruch 6, wobei:
der Diffusionsabschnitt (186b; 186c) ein Nutkörper ist.

8. Vaskuläres Modell (111; 131; 141; 151) nach Anspruch 1, wobei:
der den Strömungsweg bildende Abschnitt (181f; 182f) mit einem porösen Körper (187; 187e) ausgebildet ist und als Diffusionsabschnitt (186) fungiert, um ein Fluid, das durch den Fluidströmungsweg strömt, aus den Poren des porösen Körpers (187; 187e) durch Diffusion nach außen auszuscheiden.

9. Vaskuläres Modell (111; 131; 141; 151) nach einem der Ansprüche 1 bis 5, wobei:
mindestens ein Abschnitt des Fluidströmungsweges in dem den Strömungsweg bildenden Abschnitt (181b; 181c; 181f; 182; 182f) beschichtet ist (189; 189c; 189d).

10. Organsimulator (100; 100a; 100b; 100c; 100d; 100e; 100f; 100g; 100h; 100j; 100k; 100m), umfassend:
ein Organmodell (110; 130; 140; 150), das ein Organ simuliert, und
das vaskuläre Modell (111; 131; 141; 151) nach einem der Ansprüche 1 bis 9, das auf einer Oberfläche des Organmodells (110; 130; 140; 150) angeordnet ist.

11. Organsimulator (100; 100a; 100b; 100c; 100d; 100e; 100f; 100g; 100h; 100k; 100m) nach Anspruch 10, wobei:
das Organmodell (110; 130; 140; 150) eine Oberflächenschicht (118) umfasst, die mit einem porösen Körper (187; 187e) ausgebildet ist, und
der Diffusionsabschnitt (186; 186a; 186b; 186c; 186e; 186h) des vaskulären Modells (111; 131; 141; 151) so angeordnet ist, dass er an die Oberflächenschicht des Organmodells (110; 130; 140; 150) angrenzt.

12. Organsimulator (100; 100a; 100b; 100c; 100d; 100e; 100f; 100g; 100h; 100j; 100m) nach Anspruch 10 oder 9, der ferner umfasst:
ein Befestigungselement (191; 191g), das das vaskuläre Modell (111; 131; 141; 151) an der Oberfläche des Organmodells (110; 130; 140; 150) befestigt.

13. Organsimulator (100; 100a; 100b; 100c; 100d; 100e; 100f; 100g; 100h; 100j; 100k; 100m) nach einem der Ansprüche 10 bis 12, wobei:
das Organmodell (110; 130; 140; 150) ein Herzmodell (110) ist, das einen inneren Hohlraum (110L) aufweist und ein Herz simuliert,
der Organsimulator (100; 100a; 100b; 100c; 100d; 100e; 100f; 100g; 100h; 100j; 100k; 100m) ferner eine pulsierende Einheit (60) umfasst, um das Herzmodell (110) zum Pulsieren zu veranlassen, indem ein Expansionsmedium in den inneren Hohlraum (110L) des Herzmodells (110) eingelassen und daraus abgezogen wird.

14. Organsimulator (100m) nach Anspruch 13, der ferner umfasst:
einen Herzbeutel-Abschnitt (119) mit einer folienartigen Form, die eine Oberfläche des Herzmodells bedeckt,
wobei das vaskuläre Modell (111; 131; 141; 151) in einem Raum zwischen einer Innenfläche des Herzbeutel-Abschnitts (119) und der Oberfläche des Herzmodells (110) untergebracht ist.

## Revendications

1. Modèle vasculaire (111 ; 131 ; 141 ; 151), comprenant :
une partie de formation de trajet d'écoulement (181; 181b ; 181c ; 181f; 182 ; 182f) pour former un trajet d'écoulement de fluide s'étendant dans une direction d'extension du modèle vasculaire ; et
une partie de diffusion (186 ; 186a ; 186b ; 186c; 186e) formée d'un corps poreux (187 ; 187e) et disposée de manière à faire face au trajet d'écoulement de fluide, la partie de diffusion (186 ; 186a ; 186b ; 186c ; 186e) étant destinée à excréter un fluide s'écoulant à travers le trajet d'écoulement de fluide à partir de pores du corps poreux (187 ; 187e) vers l'extérieur de manière diffuse ; **caractérisé en ce que** les pores du corps poreux dans la partie de diffusion (186 ; 186a ; 186b ; 186c; 186e) sont remplis d'un corps élastique (188).

2. Modèle vasculaire (111 ; 131 ; 141 ; 151) selon la revendication 1, dans lequel :
la partie de formation de trajet d'écoulement (181, 182) est un corps tubulaire (181) s'étendant dans la direction d'extension du modèle vasculaire (111 ; 131 ; 141 ; 151), et
la partie de diffusion (186 ; 186a ; 186e) est disposée au niveau d'une partie d'extrémité distale du corps tubulaire (181).

3. Modèle vasculaire (111) selon la revendication 2, dans lequel :
la partie de diffusion (186) présente une forme solide et en colonne.

4. Modèle vasculaire (111) selon la revendication 2, dans lequel :
la partie de diffusion (186a) présente une forme cylindrique avec un côté d'extrémité proximale creux et un fond fermé solide au niveau d'un côté d'extrémité distale.

5. Modèle vasculaire (111 ; 131 ; 141 ; 151) selon la revendication 1, dans lequel :
la partie de formation de trajet d'écoulement (181, 182) est un corps tubulaire (181) s'étendant dans la direction d'extension du modèle vasculaire (111 ; 131 ; 141 ; 151), et
la partie de diffusion (186e) est disposée au niveau d'une partie ramifiée (184) au niveau de laquelle le corps tubulaire (181) est ramifié.

6. Modèle vasculaire (111; 131; 141; 151) selon l'une quelconque des revendications 1 à 5, dans lequel :
la partie de formation de trajet d'écoulement (181 ; 181b ; 181c ; 182) est un corps de rainure s'étendant dans la direction d'extension du modèle vasculaire (11 ; 131 ; 141 ; 151) et présentant une ouverture formée dans au moins une partie d'une direction circonférentielle, et
la partie de diffusion (186b ; 186c) est disposée de manière à faire face à l'ouverture du corps de rainure.

7. Modèle vasculaire (111 ; 131 ; 141 ; 151) selon la revendication 6, dans lequel :
la partie de diffusion (186b ; 186c) est un corps de rainure.

8. Modèle vasculaire (111 ; 131 ; 141 ; 151) selon la revendication 1, dans lequel :
la partie de formation de trajet d'écoulement (181f ; 182f) est formée d'un corps poreux (187 ; 187e) et fonctionne comme une partie de diffusion (186) pour excréter un fluide s'écoulant à travers le trajet d'écoulement de fluide depuis des pores du corps poreux (187 ; 187e) vers l'extérieur de manière diffuse.

9. Modèle vasculaire (111; 131; 141; 151) selon l'une quelconque des revendications 1 à 5, dans lequel :
au moins une partie du trajet d'écoulement de fluide dans la partie de formation de trajet d'écoulement (181b ; 181c ; 181f ; 182 ; 182f) est revêtue (189 ; 189c ; 189d).

10. Simulateur d'organe (100 ; 100a ; 100b ; 100c ; 100d ; 100e ; 100f ; 100g ; 100h ; 100j ; 100k ; 100m), comprenant :
un modèle d'organe (110 ; 130 ; 140 ; 150) simulant un organe ; et
le modèle vasculaire (111; 131; 141; 151) selon l'une quelconque des revendications 1 à 9, agencé sur une surface du modèle d'organe (110 ; 130 ; 140 ; 150).

11. Simulateur d'organe (100 ; 100a ; 100b ; 100c ; 100d ; 100e ; 100f ; 100g ; 100h ; 100k ; 100m) selon la revendication 10, dans lequel :
le modèle d'organe (110 ; 130; 140; 150) inclut une couche de surface (118) formée d'un corps poreux (187 ; 187e), et
la partie de diffusion (186 ; 186a ; 186b ; 186c ; 186e ; 186h) du modèle vasculaire (111 ; 131 ; 141 ; 151) est agencée de manière à être adjacente à la couche de surface du modèle d'organe (110 ; 130 ; 140 ; 150).

12. Simulateur d'organe (100 ; 100a ; 100b ; 100c ; 100d ; 100e ; 100f ; 100g ; 100h ; 100j ; 100m) selon la revendication 10 ou 9, comprenant en outre :
un élément de fixation (191; 191g) fixant le modèle vasculaire (111; 131; 141; 151) à la surface du modèle d'organe (110 ; 130 ; 140 ; 150).

13. Simulateur d'organe (100 ; 100a ; 100b ; 100c ; 100d ; 100e ; 100f ; 100g ; 100h ; 100j ; 100k ; 100m) selon l'une quelconque des revendications 10 à 12, dans lequel :
le modèle d'organe (110 ;130 ;140 ;150) est un modèle de coeur (110) présentant une cavité interne (110L) et simulant un coeur, le simulateur d'organe (100 ; 100a ; 100b ; 100c; 100d ; 100e; 100f; 100g; 100h ; 100j ; 100k; 100m) comprenant en outre une unité de pulsation (60) pour faire pulser le modèle de coeur (110) en déchargeant un milieu d'expansion dans la cavité interne (110L), et en le retirant de celle-ci, du modèle de coeur (110).

14. Simulateur d'organe (100m) selon la revendication 13, comprenant en outre :
une partie péricardique (119) présentant une forme semblable à un film recouvrant une surface du modèle de coeur,
le modèle vasculaire (111 ; 131 ; 141 ; 151) étant logé dans un espace entre une surface interne de la partie péricardique (119) et la surface du modèle de coeur (110).
